(19) Europäisches Patentamt
European Patent Office
Office européen des brevets

(11) EP 2 247 015 A1

(12) EUROPEAN PATENT APPLICATION
published in accordance with Art. 153(4) EPC

(43) Date of publication:
03.11.2010 Bulletin 2010/44

(51) Int Cl.:
H04L 1/16 (2006.01)      H04B 7/04 (2006.01)
H04J 11/00 (2006.01)      H04L 29/08 (2006.01)

(21) Application number: 09711962.2

(22) Date of filing: 19.02.2009

(86) International application number:
PCT/JP2009/052936

(87) International publication number:
WO 2009/104702 (27.08.2009 Gazette 2009/35)

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 21.02.2008 JP 2008040008

(71) Applicant: Sharp Kabushiki Kaisha
Osaka-shi
Osaka 545-8522 (JP)

(72) Inventors:
• SHIMEZAWA, Kazuyuki
  Osaka 545-8522 (JP)
• YOSHIMOTO, takashi
  Osaka 545-8522 (JP)
• YAMADA, Ryota
  Osaka 545-8522 (JP)
• NOGAMI, Toshizo
  Osaka 545-8522 (JP)

(74) Representative: Müller - Hoffmann & Partner
Patentanwälte
Innere Wiener Strasse 17
81667 München (DE)

(54) COMMUNICATION DEVICE, COMMUNICATION SYSTEM, RECEPTION METHOD, AND COMMUNICATION METHOD

(57) A second communication device which communicates with a first communication device, the second communication device including: a reception unit which receives an initial transmission signal and at least one retransmission signal; and an iterative detection and decoding unit which performs iterative processes of signal detection and signal decoding for at least one received signal among received signals received by the reception unit, wherein the iterative detection and decoding unit includes: a combining unit which combines a result of signal detection obtained from at least one other received signal in one of the iterative processes.

FIG. 2

**Description**

TECHNICAL FIELD

The present invention relates to a communication device, a communication system, a reception method, and a communication method.
This application is based on Japanese Patent Application No. 2008-040008 filed on February 21, 2008, the contents of which are hereby incorporated by reference.

BACKGROUND ART

Multicarrier transmission systems are OFDM (Orthogonal Frequency Division Multiplexing), OFDMA (Orthogonal Frequency Division Multiple Access), and the like. The multicarrier transmission systems reduce the effect of multipath interference by adding a guard interval (GI) to a transmission signal in a first communication device.
When an incoming wave exceeding a guard interval exists in these access systems, inter-symbol interference (ISI) or inter-carrier interference (ICI) occurs.
The inter-symbol interference (ISI) is caused by a previous symbol inserted into an FFT (Fast Fourier Transform) interval. The inter-carrier interference (ICI) is caused by a break in a symbol, that is, a discontinuous interval in a signal, which is included in the fast Fourier transform interval.
A method of improving characteristic degradation by the inter-symbol interference (ISI) and inter-carrier interference (ICI) in the case where an incoming wave exceeding the guard interval (GI) exists has been proposed in the following Patent Document 1. In this related art, a replica signal of an undesired sub-carrier including an inter-symbol interference (ISI) component and an inter-carrier interference (ICI) component is created using an error correction result (an output of a MAP decoder) after one demodulation operation is performed. Thereafter, the characteristic degradation by the inter-symbol interference (ISI) and the inter-carrier interference (ICI) is prevented by performing a second demodulation operation on the result obtained by removing the created replica signal from a received signal.
On the other hand, MC-CDM (Multi Carrier-Code Division Multiplexing) system, MC-CDMA (Multi Carrier-Code Division Multiple Access), Spread-OFCDM (Orthogonal Frequency and Code Division Multiplexing), and the like have been proposed as a combination of a multi-carrier transmission system and a CDM (Code Division Multiplexing) system.
In these access systems, for example, a signal code-multiplexed by frequency direction spreading using orthogonal codes such as Walsh-Hadamard codes is received via a multi-path environment. When there is a frequency change within an orthogonal code cycle in the received signal, the orthogonality between orthogonal codes is not maintained. Thus, multi-code interference (MCI) occurs and becomes the cause of characteristic degradation.
A method of improving the characteristic degradation by the destruction of orthogonality between codes is disclosed in Patent Document 2 and Non-Patent Document 1. In these related arts, there is a difference between uplink and downlink, but a signal out of a desired code is removed using data after error correction or after despreading so as to remove multi-code interference by code multiplexing upon MC-CDM communication in both the uplink and the downlink. Thereby, characteristics are improved.
As common in the above-described related arts, a second communication device generates an interference signal based on a replica signal generated after demodulating a received signal and performs interference cancellation. These processes are performed for the cancellation of interference such as inter-symbol interference (ISI), inter-carrier interference (ICI), multi-code interference (MCI), or the like. By iterating these processes, it is possible to improve the accuracy of a replica signal and to accurately perform interference cancellation.
However, when interference such as inter-symbol interference (ISI), inter-carrier interference (ICI), multi-code interference (MCI), or the like is large even though an iterative process using the interference canceller is performed, interference may not be fully removed. Thus, desired data is not demodulated normally and an error occurs.
As a method of controlling such an error, there is a hybrid ARQ (HARQ: Hybrid Automatic Repeat reQuest) as a combination of an Automatic Repeat reQuest (ARQ) and an error correction code of turbo coding or the like. Particularly, chase combining (CC) and incremental redundancy (IR) are well-known as HARQ, and are respectively disclosed in Non-Patent Document 2 and Non-Patent Document 3. For example, when an error is detected from a received packet in the hybrid automatic repeat request (HARQ) using chase combining (CC), the retransmission of the completely same packet is requested. The quality of reception is increased by combining the two received packets. Also, in the hybrid automatic repeat request (HARQ) using incremental redundancy (IR), redundant bits are divided and sequentially retransmitted little by little. Thus, as the number of retransmissions is increased, the coding rate may be decreased and the error correction capability may be increased.
However, in the above-described related art, the iterative process using the interference canceller or the like may not effectively utilize the reliability of a reception signal improved by a retransmission packet. Thus, there is a problem in that the number of retransmissions and the number of iterative processes for a signal to be transmitted from a first communication device to a second communication device are increased.

Patent Document 1: Japanese Unexamined Patent Publication, First Publication No. 2004-221702

Patent Document 2: Japanese Unexamined Patent Publication, First Publication No. 2005-198223

Non-Patent Document 1: Y. Zhou, J. Wang, and M. Sawahashi, "Downlink Transmission of Broadband OFCDM Systems-Part I: Hybrid Detection," IEEE Transaction on Communication, Vol. 53, Issue 4, pp. 718-729, April 2005.

Non-Patent Document 2: D. Chase, "Code combining-A maximum likelihood decoding approach for combing and arbitrary number of noisy packets," IEEE Trans. Commun., vol. COM-33, pp. 385-393, May 1985.

Non-Patent Document 3: J. Hagenauer, "Rate-compatible punctured convolutional codes (RCPC codes) and their application," IEEE Trans. Commun., vol. 36, pp. 389-400, April 1988.

DISCLOSURE OF INVENTION

Problem to be Solved by the Invention

The present invention has been made in view of the above circumstances, and an object of the invention is to provide a communication device, a communication system, a reception method, and a communication method capable of reducing the number of retransmissions and the number of iterative processes for a signal to be transmitted from a first communication device to a second communication device.

Means for Solving the Problem

(1) The present invention has been made to solve the above-described problems. According to an aspect of the present invention, there is provided a second communication device which communicates with a first communication device, the second communication device including: a reception unit which receives an initial transmission signal and at least one retransmission signal; and an iterative detection and decoding unit which performs iterative processes of signal detection and signal decoding for at least one received signal among received signals received by the reception unit, wherein the iterative detection and decoding unit includes: a combining unit which combines a result of signal detection obtained from at least one other received signal in one of the iterative processes.
The present invention performs combining in an iterative process and utilizes the reliability of a received signal improved by using a retransmission packet in a second communication device which communicates with a first communication device by using a hybrid automatic repeat request (HARQ). Thereby, it is possible to reduce the number of retransmissions and the number of iterative processes for a signal to be transmitted from the first communication device to the second communication device.
(2) In the second communication device according to the aspect of the present invention, the iterative detection and decoding unit includes: a signal detection unit which detects a transmission signal based on the received signal and a result of the iterative process; a combined signal storage unit which stores signals detected by the signal detection unit; and a signal decoding unit which decodes signals combined by the combining unit.
(3) In the second communication device according to the aspect of the present invention, the combining unit combines at least two signals among signals detected by the signal detection unit and signals previously stored by the combined signal storage unit.
(4) In the second communication device according to the aspect of the present invention, the iterative detection and decoding unit includes: a received signal storage unit which stores the received signals, and wherein the signal detection unit detects one of the received signals previously stored by the received signal storage unit.
(5) In the second communication device according to the aspect of the present invention, the received signal storage unit stores only the initial transmission signal.
(6) In the second communication device according to the aspect of the present invention, the received signal storage unit stores only the retransmission signal last received among the received signals.
(7) In the second communication device according to the aspect of the present invention, the combined signal storage unit stores one of the signals that the signal detection unit detects for each iterative process based on the received signals.
(8) In the second communication device according to the aspect of the present invention, the combining unit combines a result obtained by the iterative process from the initial transmission signal.
(9) In the second communication device according to the aspect of the present invention, the combining unit combines likelihood information.

(10) In the second communication device according to the aspect of the present invention, the iterative detection and decoding unit includes: a replica signal generation unit which generates a replica signal as a replica of a transmission signal based on a signal decoded by the signal decoding unit, and wherein the signal detection unit includes: an interference removal unit which removes an interference component included in the received signal by using the replica signal and the received signal; and a demodulation unit which demodulates the received signal from which the interference removal unit removes the interference component.

(11) In the second communication device according to the aspect of the present invention, the interference removal unit removes at least one of an inter-symbol interference component and an inter-carrier interference component.

(12) In the second communication device according to the aspect of the present invention, the iterative detection and decoding unit includes: a despreading unit which separates a code-multiplexed received signal, and wherein the interference removal unit removes at least one of a multi-code interference component, an inter-symbol interference component and an inter-carrier interference component.

(13) In the second communication device according to the aspect of the present invention, the iterative detection and decoding unit includes: a stream separation unit which separates a plurality of spatially multiplexed streams, and wherein the interference removal unit removes at least one of an inter-stream interference component, an inter-symbol interference component and an inter-carrier interference component.

(14) According to another aspect of the present invention, there is provided a communication system including a first communication device and a second communication device, wherein the first communication device includes: a transmission unit which transmits an initial transmission signal and at least one retransmission signal, wherein the second communication device includes: a reception unit which receives an initial transmission signal and at least one retransmission signal; and an iterative detection and decoding unit which performs iterative processes of signal detection and signal decoding for at least one received signal among received signals received by the reception unit, and wherein the iterative detection and decoding unit includes: a combining unit which combines a result of signal detection obtained from at least one other received signal in one of the iterative processes.

(15) According to still another aspect of the present invention, there is provided a reception method of a second communication device which receives a signal from a first communication device, the reception method including: receiving an initial transmission signal and at least one retransmission signal; and performing iterative processes of signal detection and signal decoding for at least one received signal among received signals received by the reception, wherein a combining a result of signal detection obtained from at least one other received signal in one of the iterative processes is performed in the performance.

(16) According to still another aspect of the present invention, there is provided a communication method of a communication system including a first communication device and a second communication device, the communication method including: transmitting, by the first communication device, an initial transmission signal and at least one retransmission signal; receiving, by the second communication device, an initial transmission signal and at least one retransmission signal; and performing, by the second communication device, iterative processes of signal detection and signal decoding for at least one received signal among received signals received by the reception, wherein a combining a result of signal detection obtained from at least one other received signal in one of the iterative processes is performed in the performance.

Effect of the Invention

A communication device, a communication system, a reception method, and a communication method of the present invention are able to reduce the number of retransmissions and the number of iterative processes for a signal to be transmitted from a first communication device to a second communication device.

BRIEF DESCRIPTION OF THE DRAWINGS

FIG 1 is a schematic block diagram showing the configuration of a first communication device 100a according to a first embodiment of the present invention.

FIG. 2 is a schematic block diagram showing the configuration of a second communication device 200a according to the first embodiment of the present invention.

FIG. 3 is a schematic block diagram showing the configuration of an interference cancellation unit 206 according to the first embodiment of the present invention.

FIG. 4 is a schematic block diagram showing the configuration of an HARQ processing unit 211 according to the first embodiment of the present invention.

FIG 5 is a schematic block diagram showing the configuration of a signal decoding unit 212 according to the first embodiment of the present invention.

FIG. 6 is a schematic block diagram showing the configuration of a replica signal generation unit 214 according to the first embodiment of the present invention.

FIG. 7 is a flowchart showing a process of the second communication device 200a according to the first embodiment of the present invention.

FIG. 8 is a diagram illustrating an encoding process according to the first embodiment of the present invention.

FIG. 9 is a diagram showing puncturing patterns at coding rates of 1/3, 1/2, and 3/4.

FIG. 10 is a diagram illustrating a process of decoding turbo codes according to the first embodiment of the present invention.

FIG 11 is a diagram showing an example of a puncturing pattern.

FIG. 12 is a diagram illustrating a combining process.

FIG. 13 is a schematic block diagram showing the configuration of a second communication device 200b according to a second embodiment of the present invention.

FIG 14 is a schematic block diagram showing the configuration of a second communication device 200c according to a third embodiment of the present invention.

FIG 15 is a schematic block diagram showing the configuration of an HARQ processing unit 401 according to the third embodiment of the present invention.

FIG. 16 is a schematic block diagram showing the configuration of an interference cancellation unit 402 according to the third embodiment of the present invention.

FIG 17 is a schematic block diagram showing the configuration of a first communication device 100d according to a fourth embodiment of the present invention.

FIG. 18 is a schematic block diagram showing the configuration of a second communication device 200d according to the fourth embodiment of the present invention.

FIG. 19 is a schematic block diagram showing the configuration of a signal separation unit 606 according to the fourth embodiment of the present invention.

FIG. 20A is a diagram showing a method of multiplexing and transmitting 3 packets per frame.

FIG. 20B is a diagram showing a method of multiplexing and transmitting 3 packets per frame.

Reference Symbols

100a to 100d: FIRST COMMUNICATION DEVICE
101: ENCODING UNIT
102: INTERLEAVING UNIT
103: MODULATION UNIT
104: IFFT UNIT
105: TRANSMISSION SIGNAL INFORMATION MULTIPLEXING UNIT
106: GI INSERTION UNIT
107: RADIO TRANSMISSION UNIT
111: RADIO RECEPTION UNIT
112: GI REMOVAL UNIT
113: FFT UNIT
114: DEMODULATION UNIT
115: RESPONSE SIGNAL ANALYSIS UNIT
116: TRANSMISSION SIGNAL STORAGE UNIT
200a to 200d: SECOND COMMUNICATION DEVICE
201: RADIO RECEPTION UNIT
202: GI REMOVAL UNIT
203: SEPARATION UNIT
204: TRANSMISSION SIGNAL INFORMATION ANALYSIS UNIT
205: FFT UNIT
206: INTERFERENCE CANCELLATION UNIT
207: PROPAGATION CHANNEL ESTIMATION UNIT
208: PROPAGATION CHANNEL COMPENSATION UNIT
209: DEMODULATION UNIT
210: DE-INTERLEAVING UNIT

211: HARQ PROCESSING UNIT
212: SIGNAL DECODING UNIT
213: RETRANSMISSION CONTROL UNIT
214: REPLICA SIGNAL GENERATION UNIT
221: RESPONSE SIGNAL GENERATION UNIT
222: MODULATION UNIT
223: IFFT UNIT
224: GI INSERTION UNIT
225: RADIO TRANSMISSION UNIT
A1: ANTENNA
A2: ANTENNA

BEST MODE FOR CARRYING OUT THE INVENTION

(First Embodiment)

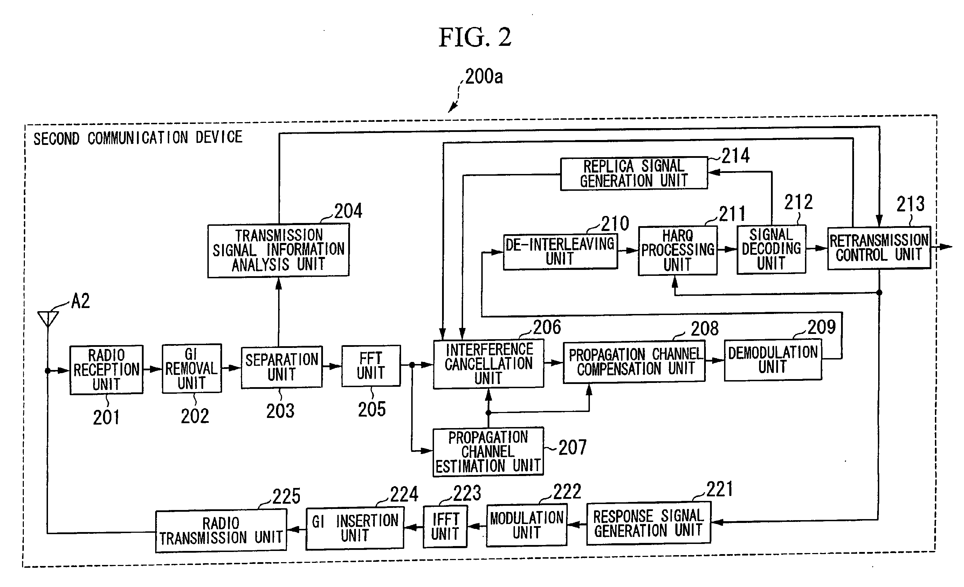

In this embodiment, a communication system using a hybrid automatic repeat request (HARQ) will be described. In this embodiment, when a second communication device (see FIG. 2 to be described later), which performs an iterative process using an interference canceller, receives a retransmission packet, combining is performed in the iterative process and the reliability of a received signal improved by using the retransmission packet is utilized. Thereby, it is possible to reduce the number of retransmissions and the number of iterative processes.

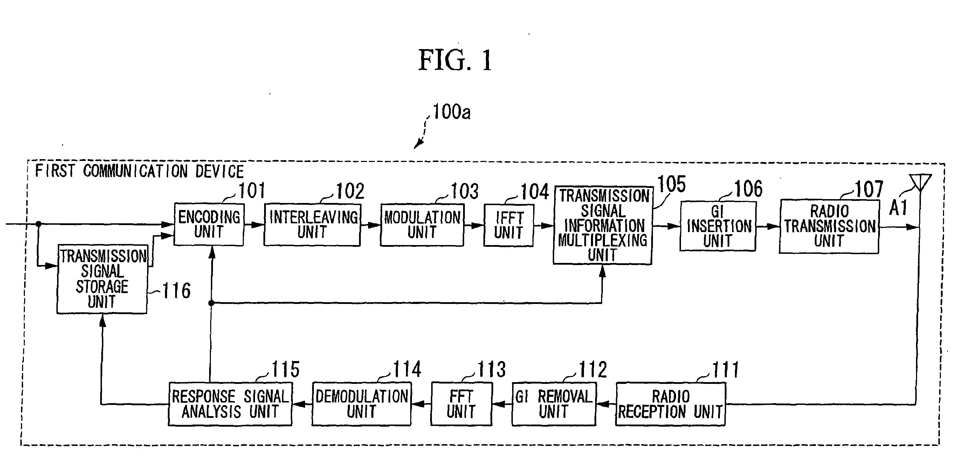

FIG. 1 is a schematic block diagram showing the configuration of a first communication device 100a according to a first embodiment of the present invention. The first communication device 100a includes an encoding unit 101, an interleaving unit 102, a modulation unit 103, an IFFT unit 104, a transmission signal information multiplexing unit 105, a GI insertion unit 106, a radio transmission unit 107 (also referred to as a transmission unit), a radio reception unit 111, a GI removal unit 112, an FFT unit 113, a demodulation unit 114, a response signal analysis unit 115, a transmission signal storage unit 116, and an antenna A1.

The first communication device 100a outputs information bits (a packet) to be transmitted for the second communication device to the encoding unit 101 and the transmission signal storage unit 116. Here, the packet is a unit in which an error detection code is generated. When there is a retransmission request from the second communication device, the transmission signal storage unit 116 stores information bits so as to retransmit the transmitted information bits. The encoding unit 101 performs error detection coding for the input information bits by an error detection code such as CRC (Cyclic Redundancy Check). Thereafter, the encoding unit 101 further performs error correction coding by a convolutional code, a turbo code, an LDPC (Low Density Parity Check) code, or the like, and outputs the error correction coding result to the interleaving unit 102.

The interleaving unit 102 performs an interleaving process for coded bits, and outputs the interleaved bits to the modulation unit 103. The modulation unit 103 maps an interleaved signal to a modulation symbol of QPSK (Quadrature Phase Shift keying), 16 QAM (Quadrature Amplitude Modulation), or the like, and outputs the modulation symbol to the IFFT unit 104.

The IFFT unit 104 converts the modulation symbol from a frequency signal to a time signal by IFFT (Inverse Fast Fourier Transform) or the like, and outputs the time signal to the transmission signal information multiplexing unit 105. The transmission signal information multiplexing unit 105 multiplexes information regarding a transmission signal such as whether a packet to be transmitted is initially transmitted or retransmitted into the signal output by the IFFT unit 104. It is preferable to transmit the transmission signal information so that the receiver is able to separate the transmission signal information. For example, the transmission signal information is transmitted using time division multiplexing, frequency division multiplexing, code division multiplexing, or the like.

The GI insertion unit 106 inserts a guard interval (GI) into a signal converted from the frequency signal into the time signal, and outputs the signal to the radio transmission unit 107. The radio transmission unit 107 performs digital-analog conversion, frequency conversion, and the like for the signal into which the guard interval (GI) is inserted, and transmits the signal to the second communication device via the antenna A1.

The radio reception unit 111 receives a signal including a response signal transmitted by the second communication device, performs frequency conversion, analog-digital conversion, and the like, and outputs the signal to the GI removal unit 112. The response signal is a notification signal from the second communication device to the first communication device 100a, wherein the notification signal indicates whether the second communication device accurately receives information bits transmitted by the first communication device 100a to the second communication device. For example, the response signal is ACK (Acknowledgement) when the signal is accurately received, and the response signal is NACK (Negative Acknowledgement) when the signal is not accurately received.

The GI removal unit 112 removes a guard interval (GI) from the signal output by the radio reception unit 111, and outputs the signal to the demodulation unit 114.

The demodulation unit 114 demodulates the signal output by the GI removal unit 112, and outputs the demodulated signal to the FFT unit 113.

The response signal analysis unit 115 analyzes the response signal based on the signal demodulated by the demodulation unit 114, and analyzes whether information bits transmitted by the first communication device 100a to the second communication device are ACK or NACK.

When the response signal is ACK, the information bits stored in the transmission signal storage unit 116 are deleted without performing the retransmission. On the other hand, when the response signal is NACK, the retransmission is performed. To perform the retransmission, the information bits stored in the transmission signal storage unit 116 are output to the encoding unit 101. The encoding unit 101 performs error correction coding for a signal output by the transmission signal storage unit 116.

Here, for example, in the case of the retransmission using chase combining (CC), the same coded bits as those of an initially transmitted packet (also referred to as an initial transmission packet) are generated as a retransmission packet. In the case of the retransmission using incremental redundancy (IR), coded bits including redundant bits (parity bits) different from that of the initial transmission packet are generated as a retransmission packet. Hereinafter, the retransmission to the second communication device is performed by performing the same process as the above-described process in the demodulation unit 114, the IFFT unit 104, the GI insertion unit 106, and the radio transmission unit 107.

FIG. 2 is a schematic block diagram showing the configuration of a second communication device 200a according to the first embodiment of the present invention. The second communication device 200a includes a radio reception unit 201 (also referred to as a reception unit), a GI removal unit 202, a separation unit 203, a transmission signal information analysis unit 204, an FFT unit 205, an interference cancellation unit 206 (also referred to as an interference removal unit), a propagation channel estimation unit 207, a propagation channel compensation unit 208, a demodulation unit 209, a de-interleaving unit 210, an HARQ processing unit 211, a signal decoding unit 212, a replica signal generation unit 214, a retransmission control unit 213, a response signal generation unit 221, a modulation unit 222, an IFFT unit 223, a GI insertion unit 224, a radio transmission unit 225, and an antenna A2.

The interference cancellation unit 206, the propagation channel compensation unit 208, the demodulation unit 209, the de-interleaving unit 210, the HARQ processing unit 211, the signal decoding unit 212, and the replica signal generation unit 214 are collectively referred to as an iterative detection and decoding unit.

The interference cancellation unit 206, the propagation channel compensation unit 208, and the demodulation unit 209 are collectively referred to as a signal detection unit.

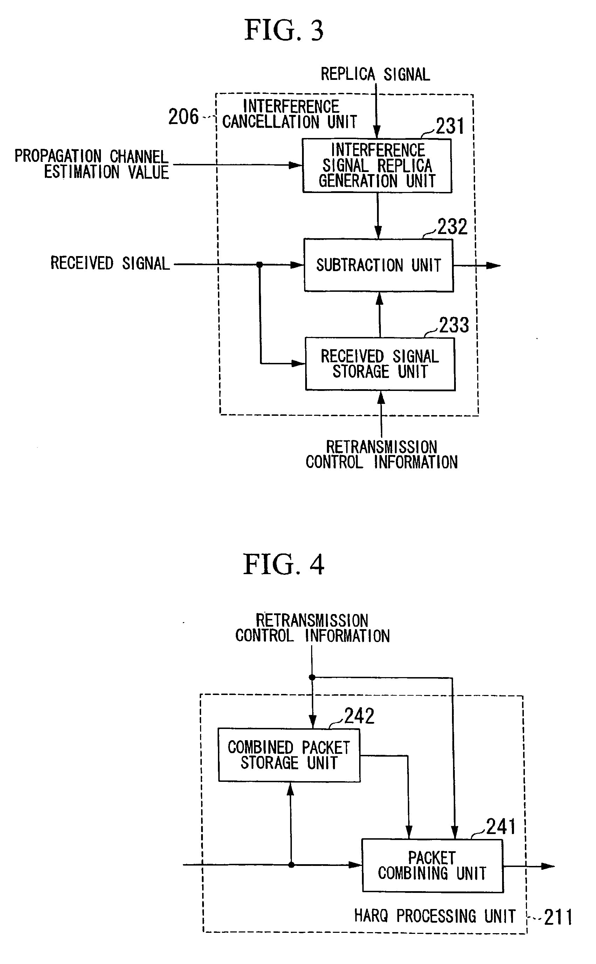

FIG. 3 is a schematic block diagram showing the configuration of the interference cancellation unit 206 (see FIG 2) according to the first embodiment of the present invention. The interference cancellation unit 206 includes an interference signal replica generation unit 231, a subtraction unit 232, and a received signal storage unit 233.

FIG. 4 is a schematic block diagram showing the configuration of the HARQ processing unit 211 (see FIG. 2) according to the first embodiment of the present invention. The HARQ processing unit 211 includes a packet combining unit 241 (also referred to as a combining unit) and a combined packet storage unit 242 (also referred to as a combined signal storage unit).

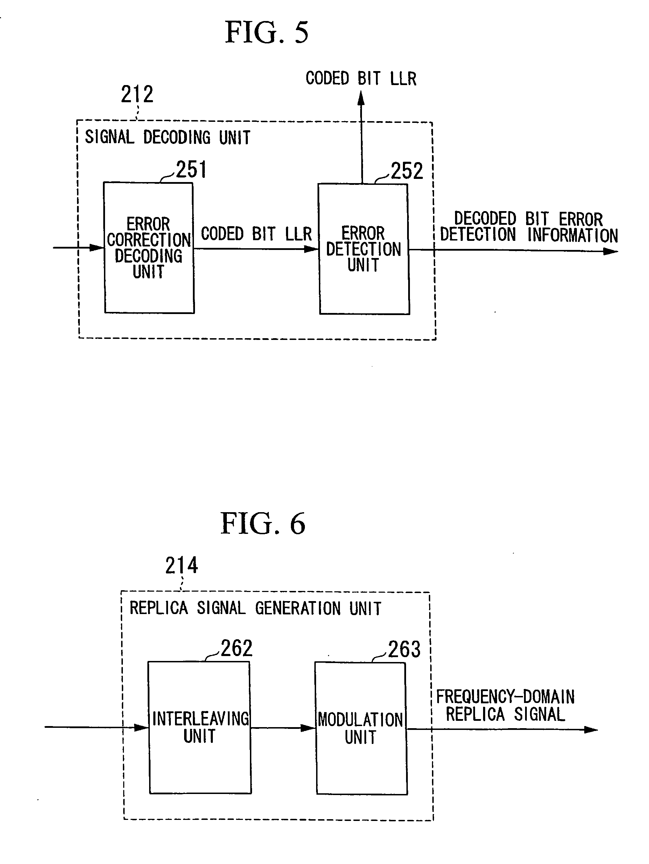

FIG. 5 is a schematic block diagram showing the configuration of the signal decoding unit 212 (see FIG. 2) according to the first embodiment of the present invention. The signal decoding unit 212 includes an error correction decoding unit 251 and an error detection unit 252.

FIG. 6 is a schematic block diagram showing the configuration of the replica signal generation unit 214 (see FIG. 2) according to the first embodiment of the present invention. The replica signal generation unit 214 includes an interleaving unit 262 and a modulation unit 263.

Hereinafter, the case where an initial transmission packet is received by the second communication device 200a will be described. The radio reception unit 201 performs frequency conversion, analog-digital conversion, and the like for a received signal, and outputs the signal to the GI removal unit 202.

The GI removal unit 202 removes a guard interval (GI) from the signal output by the radio reception unit 201, and outputs the signal to the separation unit 203.

The separation unit 203 separates transmission signal information multiplexed by the first communication device 100a, and outputs the transmission signal information to the transmission signal information analysis unit 204. The separation unit 203 outputs the received packet excluding the transmission signal information to the FFT unit 205.

The transmission signal information analysis unit 204 analyzes information regarding a transmission signal such as whether the received packet is initially transmitted or retransmitted based on transmission signal information separated by the separation unit 203, and outputs the analysis result to the retransmission control unit 213. The FFT unit 205 converts the received packet excluding the transmission signal information separated by the separation unit 203 from a time signal into a frequency signal.

The frequency domain signal output by the FFT unit 205 is input to the interference cancellation unit 206. Since a replica signal is not generated in an initial process, the interference cancellation unit 206 directly outputs the input signal. The received signal storage unit 233 (FIG. 3) stores the signal input to the interference cancellation unit 206. When a retransmission packet is received, the signal stored in the received signal storage unit 233 is combined with the reception result of the retransmission packet, and is used as a received signal for performing an iterative process for the initial transmission packet once again.

The propagation channel estimation unit 207 performs propagation channel estimation using the signal output by the FFT unit 205, produces a propagation channel estimation value, and outputs the propagation channel estimation value to the interference cancellation unit 206 and the propagation channel compensation unit 208. The propagation channel estimation unit 207 stores a propagation channel estimation value for each received packet until the second communication device 200a appropriately receives information bits transmitted by the first communication device 100a.

The propagation channel estimation value is produced based on the frequency domain signal output by the FFT unit 205 in this embodiment, but is not limited thereto. For example, the propagation channel estimation value may be produced based on a previous time domain signal input to the FFT unit 205.
A method of using a pilot signal including known information between the first communication device and the second communication device may be used as a method of propagation channel estimation to be performed by the propagation channel estimation unit 207, but it is not limited thereto.

A signal output by the interference cancellation unit 206 is input to the propagation channel compensation unit 208. The propagation channel compensation unit 208 performs propagation channel compensation using a weight coefficient using a ZF (Zero Forcing) criterion, an MMSE (Minimum Mean Square Error) criterion, or the like based on the propagation channel estimation value estimated by the propagation channel estimation unit 207.

The demodulation unit 209 performs a demodulation process for a signal for which the propagation channel compensation unit 208 performs propagation channel compensation, and calculates a coded bit LLR (Log Likelihood Ratio). The LLR is referred to as likelihood information or a log likelihood ratio. The LLR is a log likelihood ratio (probability) of whether its bit is 1 or 0. Thereafter, for example, an LLR of a bit a is denoted by $\lambda(a)$.
Next, a process of the demodulation unit 209 will be described. Hereinafter, an example of QPSK modulation will be described. The case where a QPSK symbol transmitted at the transmitter is X and a symbol after despreading at the receiver is Xc will be described. Assuming that bits constituting X are $b_0$ and $b_1$ ($b_0$, $b_1 = \pm 1$), X is expressed by the following Equation (1).

[Equation 1]

$$X = \frac{1}{\sqrt{2}}(b_0 + jb_1) \qquad \cdots \quad (1)$$

In this regard, j represents an imaginary unit. $\lambda(b_0)$ and $\lambda(b_1)$ as LLRs of the bits $b_0$ and $b_1$ from the estimation value Xc at the receiver of X are produced by the following Equation (2).

[Equation 2]

$$\lambda(b_0) = \frac{2\text{Re}(X_c)}{\sqrt{2}(1-\mu)} \qquad \cdots \quad (2)$$

In this regard, Re() represents a real part of a complex number. $\mu$ is an equivalent amplitude after propagation channel compensation. For example, when a propagation channel estimation value in a k-th subcarrier is H(k) and a propagation channel compensation weight of an MMSE criterion multiplied is W(k), $\mu$ becomes W(k)H(k). $\lambda(b_1)$ is produced by replacing a real part and an imaginary part of $\lambda(b_0)$.

The de-interleaving unit 210 performs a de-interleaving process for a coded bit LLR output by the demodulation unit 209, and outputs the de-interleaved coded bit LLR to the HARQ processing unit 211.
The de-interleaved coded bit LLR is input to the HARQ processing unit 211, but the input signal is directly output to the signal decoding unit 212 when a received signal is only an initial transmission packet. The combined packet storage unit 242 (FIG. 4) stores the input coded bit LLR (the result after a demodulation process for the initial transmission packet) for combining of a hybrid automatic repeat request (HARQ).

An error correction decoding process is performed for the signal input to the signal decoding unit 212 by the error correction decoding unit 251 (FIG. 5), and coded bit LLRs are output. Here, the coded bit LLRs are log likelihood ratios (LLRs) of systematic bits and parity bits.

The error detection unit 252 (FIG. 5) generates decoded bits by performing a hard decision process for information bits of the coded bit LLRs, and performs an error detection process for a packet thereof to generate error detection information. Also, the error detection unit 252 determines whether to continue or end an iterative process based on the generated error detection information.

When no error is detected, the error detection unit 252 ends the iterative process and outputs the decoded bits and the error detection information to the retransmission control unit 213. When no error is detected from the packet, the retransmission control unit 213 outputs the input decoded bits and outputs the error detection information to the response signal generation unit 221.

On the other hand, when an error is detected by the error detection unit 252, a determination is made as follows. When the number of iterations of the iterative process does not reach the preset maximum number of iterations, the iterative process is continued and the signal decoding unit 212 outputs the coded bit LLRs to the replica signal generation unit 214. When the number of iterations of the iterative process reaches the preset maximum number of iterations, the iterative process is ended and the signal decoding unit 212 outputs the error detection information to the retransmission control unit 213.

When a packet error is detected, the retransmission control unit 213 outputs the error detection information to the response signal generation unit 221 so as to make a packet retransmission request to the first communication device 100a. Here, CRC (Cycle Redundancy Check) or the like may be used as an error detection method, but it is not limited thereto. A method based on the preset maximum number of iterations has been described as a method of determining whether to continue or end the iterative process, but it is not limited thereto. For example, whether to continue or end the iterative process may be determined based on a likelihood of an input coded bit LLR.

Next, an iterative process for an initial transmission packet will be described. The replica signal generation unit 214 performs the following process to generate a frequency domain replica signal from the coded bit LLR output by the signal decoding unit 212. The interleaving unit 262 of FIG. 6 performs an interleaving process based on an interleaving pattern of the initial transmission packet, and outputs the interleaving result to the modulation unit 263.

The modulation unit 263 of FIG 6 generates a frequency domain replica signal by performing a modulation process for a signal output by the interleaving unit 262 based on a modulation scheme of the initial transmission packet.

Next, a process of the replica signal generation unit 214 will be described. An example of QPSK modulation will be described. When LLRs of bits constituting a QPSK modulation symbol are $\lambda(b_0)$ and $\lambda(b_1)$, a replica Z of the QPSK modulation symbol is expressed by the following Equation (3).

[Equation 3]

$$Z = \frac{1}{\sqrt{2}}\tanh(\lambda(b_0)/2) + \frac{j}{\sqrt{2}}\tanh(\lambda(b_1)/2) \qquad \cdots \quad (3)$$

The generated replica signal is input to the interference cancellation unit 206. The interference signal replica generation unit 231 (FIG. 3) generates a frequency-domain interference signal replica from the replica signal and the propagation channel estimation value output by the propagation channel estimation unit 207.

Inter-symbol interference (ISI), inter-carrier interference (ICI), multi-code interference (MCI), or the like may be used as an interference signal replica according to this embodiment, but it is not limited thereto. When the multi-code interference (MCI) is used as the interference signal replica, a spreading unit which performs code multiplexing for a transmission signal is provided in the first communication device 100a. A despreading unit which separates a code-multiplexed signal is provided in the second communication device.

The subtraction unit 232 (FIG. 3) subtracts the generated interference signal replica from a received signal of the initial transmission packet, and outputs the subtraction result to the propagation channel compensation unit 208. Thereafter, the same process as the already described process is iterated until the error detection unit 252 (FIG. 5) determines to end the iterative process.

When the error detection unit 252 determines to end the iterative process, the retransmission control unit 213 outputs the error detection information to the response signal generation unit 221.

The response signal generation unit 221 generates an ACK or NACK response signal based on the error detection information output by the retransmission control unit 213, and outputs the generated response signal to the modulation unit 222. The modulation unit 222 maps the response signal output by the response signal generation unit 221 to a modulation symbol of QPSK, 16QAM, or the like.

The IFFT unit 223 converts a frequency signal into a time signal by performing an inverse fast Fourier transform (IFFT) process for the modulation symbol output by the modulation unit 222, and outputs the signal to the GI insertion unit 224. The GI insertion unit 224 inserts a guard interval (GI) into the signal converted by the IFFT unit 223 from the frequency signal into the time signal, and outputs the signal to the radio transmission unit 225. The radio transmission unit 225 performs digital-analog conversion, frequency conversion, and the like for the signal into which the GI insertion unit 224 inserts the guard interval (GI), and transmits the signal to the first communication device 1 00a via the antenna A2.

Next, the case where the second communication device 200a receives a retransmission packet will be described. When identifying that a received signal is a retransmission packet based on received signal information, the retransmission control unit 213 generates retransmission control information for performing a retransmission process for the received signal, and outputs the generated retransmission control information to the interference cancellation unit 206, the response signal generation unit 221, and the HARQ processing unit 211. For example, the retransmission control information includes signal information of coding rates or puncturing patterns of an initial transmission packet and a retransmission packet, control information for combining of a hybrid automatic repeat request (HARQ), or the like.

The radio reception unit 201 performs frequency conversion, analog-digital conversion, and the like for the received signal, and outputs the signal to the GI removal unit 202. The GI removal unit 202 removes a guard interval (GI) from the signal output by the radio reception unit 201, and outputs the signal to the separation unit 203. The FFT unit 205 converts a signal output by the separation unit 203 from a time signal into a frequency signal, and outputs the converted signal to the propagation channel estimation unit 207 and the interference cancellation unit 206.

The propagation channel estimation unit 207 outputs a propagation channel estimation value to the interference cancellation unit 206 and the propagation channel compensation unit 208 by performing propagation channel estimation using the signal output by the FFT unit 205.

As in an initial process for an initial transmission packet; the interference cancellation unit 206 directly outputs the received signal of the retransmission packet output by the FFT unit 205. The propagation channel compensation unit 208 performs propagation channel compensation by using a weight coefficient using a ZF criterion, an MMSE criterion, or the like based on the propagation channel estimation value estimated by the propagation channel estimation unit 207, and outputs the propagation channel compensation result to the demodulation unit 209. The demodulation unit 209 calculates a coded bit LLR by performing a demodulation process for a signal for which the propagation channel estimation unit 207 performs the propagation channel compensation, and outputs the coded bit LLR to the de-interleaving unit 210.

The de-interleaving unit 210 performs a de-interleaving process for the coded bit LLR output by the demodulation unit 209, and outputs the de-interleaved coded bit LLR to the HARQ processing unit 211.

The coded bit LLR of the retransmission packet output by the de-interleaving unit 210 and the retransmission control information output by the retransmission control unit 213 are input to the HARQ processing unit 211. Based on the retransmission control information, the combined packet storage unit 242 (FIG. 4) outputs the coded bit LLR obtained in the initial process of the stored initial transmission packet based on the retransmission control information to the packet combining unit 241 (FIG. 4).

Based on the retransmission control information, the packet combining unit 241 combines the coded bit LLR of the retransmission packet and the coded bit LLR obtained in the initial process of the initial transmission packet stored in the combined packet storage unit 242, and outputs the combining result to the signal decoding unit 212.

It is preferable to combine corresponding coded bit LLRs when the retransmission is performed, for example, using chase combining (CC) as a combining method in the packet combining unit 241. It is preferable to combine corresponding coded bit LLRs by performing a de-puncturing process for packets when the retransmission is performed using incremental redundancy (IR).

The error correction decoding unit 251 (FIG. 5) performs an error correction decoding process for the signal input to the signal decoding unit 212 and outputs a coded bit LLR to the error detection unit 252.

The error detection unit 252 (FIG 5) first generates decoded bits by performing a hard decision process for information bits of a coded bit LLR, and generates error detection information by performing an error detection process for a packet thereof. Also, the error detection unit 252 determines whether to continue or end the iterative process based on the generated error detection information or the like.

When no error is detected, the error detection unit 252 ends the iterative process, and outputs the decoded bits and the error detection information to the retransmission control unit 213. When no error is detected from the packet, the retransmission control unit 213 outputs the input decoded bits, and outputs the error detection information to the response signal generation unit 221.

On the other hand, when the error is detected, the error detection unit 252 makes the determination as follows. When the number of iterations of the iterative process does not reach the preset maximum number of iterations, the iterative process is continued. The signal decoding unit 212 outputs a coded bit LLR to the replica signal generation unit 214. When the number of iterations of the iterative process reaches the preset maximum number of iterations, the iterative process is ended, and the signal decoding unit 212 outputs the error detection information to the retransmission control unit 213. When an error is detected from the packet, the retransmission control unit 213 outputs the error detection information to the response signal generation unit 221 so as to make a packet retransmission request to the first communication device 100a.

Hereinafter, an iterative process when an error is detected in an error correction decoding result of data in which a demodulation result of an initial transmission packet and a demodulation result of a retransmission packet are combined after the retransmission packet is received will be described.

The replica signal generation unit 214 performs the next process to generate a replica signal of the initial transmission packet from a coded bit LLR output by the signal decoding unit 212. The interleaving unit 262 of FIG. 6 performs an interleaving process based on an interleaving pattern of the initial transmission packet, and outputs the interleaving result to the modulation unit 263.

The modulation unit 263 of FIG. 6 generates a replica signal of the initial transmission packet by performing a modulation process based on a modulation scheme of the initial transmission packet.

The modulation unit 263 outputs the generated replica signal of the initial transmission packet as a frequency-domain replica signal to the interference cancellation unit 206.

The interference signal replica generation unit 231 (FIG. 3) generates an interference signal replica for the initial transmission packet from the replica signal and the propagation channel estimation value output by the propagation channel estimation unit 207. The received signal storage unit 233 outputs a received signal of the initial transmission packet stored by the received signal storage unit 233 (FIG. 3) to the subtraction unit 232 (FIG. 3) based on the retransmission control information output from the retransmission control unit 213.

The subtraction unit 232 subtracts the interference signal replica generated by the interference signal replica generation unit 231 from the received signal of the initial transmission packet stored in the received signal storage unit 233, and outputs the subtraction result to the propagation channel compensation unit 208.

The propagation channel compensation unit 208, the demodulation unit 209, and the de-interleaving unit 210 perform the same process as the already described process. The HARQ processing unit 211 (FIG. 2) directly outputs an input signal to the signal decoding unit 212 without combining packets at the time of the iterative process. The signal decoding unit 212 performs the same process as the already described process. Thereafter, the iterative process is performed until the error detection unit 252 (FIG. 5) determines the end of the iterative process.

When the error detection unit 252 (FIG. 5) determines the end of the iterative process, the error detection information is output to the response signal generation unit 221. The response signal generation unit 221 generates an ACK or NACK response signal based on the error detection information output from the retransmission control unit 213. The modulation unit 222 maps the response signal to a modulation symbol of QPSK, 16QAM, or the like, and outputs the modulation symbol to the IFFT unit 223. The IFFT unit 223 performs frequency-time conversion by IFFT or the like for the modulation symbol, and outputs the frequency-time conversion result to the GI insertion unit 224.

The GI insertion unit 224 inserts a guard interval (GI) into a frequency-time converted signal, and outputs the frequency-time converted signal to the radio transmission unit 225. The radio transmission unit 225 performs digital-analog conversion, frequency conversion, and the like for the signal into which the guard interval (GI) is inserted, and transmits the signal to the first communication device 100a via the antenna A2.

The above-described process is iterated until it is determined that the packet is received without error or the retransmission process is ended.

The following effects are obtained when the second communication device 200a which performs the iterative process using the interference canceller receives a retransmission packet in a communication system using a hybrid automatic repeat request (HARQ) by using this embodiment. That is, it is possible to reduce the number of retransmissions and the number of iterative processes by performing combining in an iterative process and utilizing the reliability of a received signal improved by a retransmission packet.

The HARQ processing unit 211 uses a coded bit LLR obtained by an initial process as an initial transmission packet to be combined in the above description, but is not limited thereto. For example, a coded bit LLR obtained by the last iterative process may be used. Any of coded bit LLRs obtained by respective iterative processes may be used. For example, a coded bit LLR having the highest likelihood may be used.

The HARQ processing unit 211 uses a coded bit LLR obtained by an initial process as a retransmission packet to be combined in the above description, but is not limited thereto. For example, coded bit LLRs obtained by iterative processes of a preset number of iterations may be used. Any of coded bit LLRs obtained by a plurality of iterative processes may be used. For example, a coded bit LLR having the highest likelihood may be used.

The case where a retransmission request to the first communication device 100a is made after the second communication device 200a receives the initial transmission packet has been described above. The case of combining two packets when the second communication device 200a receives a retransmission packet has been described, but the present invention is not limited thereto. For example, when at least two retransmission packets are received, results after demodulation processes for all received packets may be combined, and results after demodulation processes for at least two packets among all the received packets may be combined.

The case of performing the iterative process when an error is detected in the error correction decoding result of data obtained by combining the demodulation result of an initial transmission packet and the demodulation result of a retransmission packet after the retransmission packet is received has been described above. The case of using a received signal of an initial transmission packet stored by the received signal storage unit 233 (FIG 3) as a received signal for performing interference cancellation in the iterative process has been described, but the present invention is not limited thereto. For example, the retransmission packet may be used as a received signal for performing interference cancellation.

The case of using a multicarrier signal as a transmission/reception signal has been described above, but a single carrier signal may be used.

The case of using the interleaving unit 262 (FIG. 6) and the de-interleaving unit 210 (FIG. 2) has been described above, but the interleaving unit and the de-interleaving unit may not be used.

The case where the second communication device 200a performs an iterative process using a frequency-domain interference canceller has been described above, but the present invention is not limited thereto. For example, the second communication device 200a may perform an iterative process using a time-domain interference canceller.

The configuration of the second communication device 200a of this embodiment is also applicable to a second communication device using a frequency domain SC/MMSE (Soft Canceller followed by Minimum Mean Squared Error filter) type of turbo equalization or a time domain SC/MMSE type of turbo equalization.

It is also applicable to the second communication device, which performs stream separation upon MIMO (Multi-Input Multi-Output) transmission. When the stream separation is performed upon MIMO transmission, a stream separation unit which separates a plurality of spatially multiplexed streams may be provided in the second communication device.

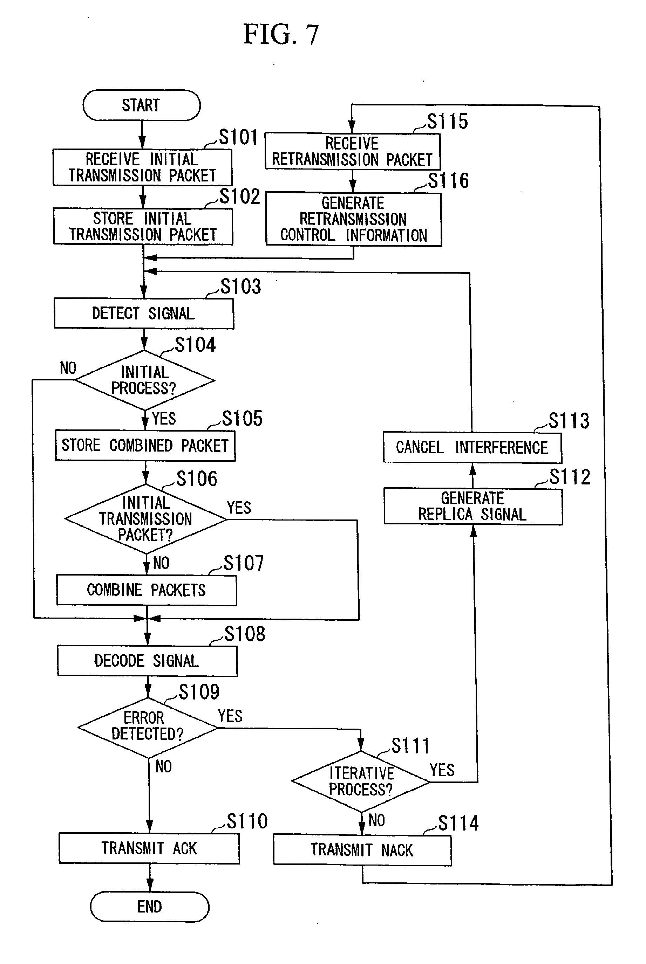

FIG 7 is a flowchart showing a process of the second communication device 200a according to the first embodiment of the present invention. The second communication device 200a receives an initial transmission packet (step S101). The second communication device 200a stores the initial transmission packet so as to perform interference cancellation to be described later (step S102).

When a corresponding packet is the initial transmission packet and is subjected to an initial process, the second communication device 200a performs propagation channel compensation and demodulation based on an estimated propagation channel estimation value and detects a signal from the initial transmission packet received in step S101 (step S103).

The second communication device 200a determines whether the iterative process is the initial process (step S104). When the iterative process is not the initial process, the second communication device 200a performs the process of step S 108 by omitting the process of steps S105 to S107. In the case of the initial process, the second communication device 200a stores a coded bit LLR of a corresponding packet for combining of a hybrid automatic repeat request (HARQ) to be described later (step S105).

The second communication device 200a determines whether the corresponding packet is the initial transmission packet (step S106). In the case of the initial transmission packet, the second communication device 200a performs the process of step S108 by omitting the process of step S107. When the corresponding packet is not the initial transmission packet, the second communication device 200a performs combining of the hybrid automatic repeat request (HARQ) for a coded bit LLR stored in step S105 and the coded bit LLR of the corresponding packet (step S107).

The second communication device 200a performs error correction decoding (step S108). The second communication device 200a determines whether there is an error in the corresponding packet (step S109). When the error is detected, the second communication device 200a determines whether to perform the iterative process for the corresponding packet (step S111).

When the iterative process is performed, the second communication device 200a generates a replica signal of the initial transmission packet from a coded bit LLR obtained by step S108 so as to perform interference cancellation to be described later (step S112).

The second communication device 200a generates an interference replica signal from the replica signal generated in step S112 so as to cancel an interference component from the initial transmission packet stored in step S102, and performs interference cancellation (step S113). In the case of the iterative process, the second communication device 200a performs signal detection based on the initial transmission packet from which the interference is cancelled in step S113 (step S103).

Thereafter, the second communication device 200a performs the iterative process until the time of determining to end the iterative process in step S111. When determining to end the iterative process in step S111, the second communication device 200a transmits NACK to the first communication device and makes a retransmission request (step S114).

The second communication device 200a receives a retransmission packet (step S115). The second communication device 200a generates retransmission control information for processing the retransmission packet (step S116). When the corresponding packet is the retransmission packet and is subjected to the initial process, the second communication device 200a performs signal detection based on the retransmission packet received in step S115 (step S103).

Hereinafter, the second communication device 200a performs the process of steps S103 to S108 and S111 to S116 until no error is detected in step S109. When no error is detected in step S109, the second communication device 200a transmits ACK to the first communication device and ends the process of the flowchart shown in FIG. 7 (step S110).

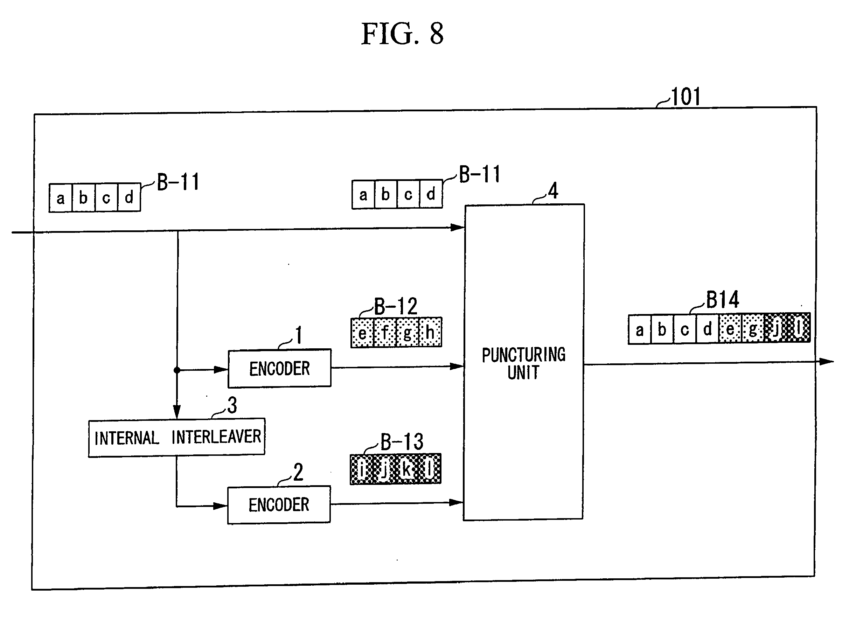

FIG. 8 is a diagram illustrating an encoding process according to the first embodiment of the present invention. This encoding process is performed by the encoding unit 101 (FIG. 1) of the first communication device 100a. Here, the case of using a turbo code as an example of the encoding process will be described. The encoding unit 101 includes an encoder 1, an encoder 2, an internal interleaver 3, and a puncturing unit 4.

For example, it is assumed that the first communication device 100a intends to transmit four bits of information bits B-11 (a, b, c, and d) to the second communication device 200a.

The internal interleaver 3 performs an internal interleaving process for the information bits B-11 and outputs the interleaving result to the encoder 2.

The encoder 1 generates parity bits B-12 (e, f, g, and h) based on the information bits B-11, and outputs the generated parity bits B-12 (e, f, g, and h) to the puncturing unit 4.

The encoder 2 generates parity bits B-13 (i, j, k, and 1) based on the information bits B-11, and outputs the generated parity bits B-13 (i, j, k, and 1) to the puncturing unit 4.

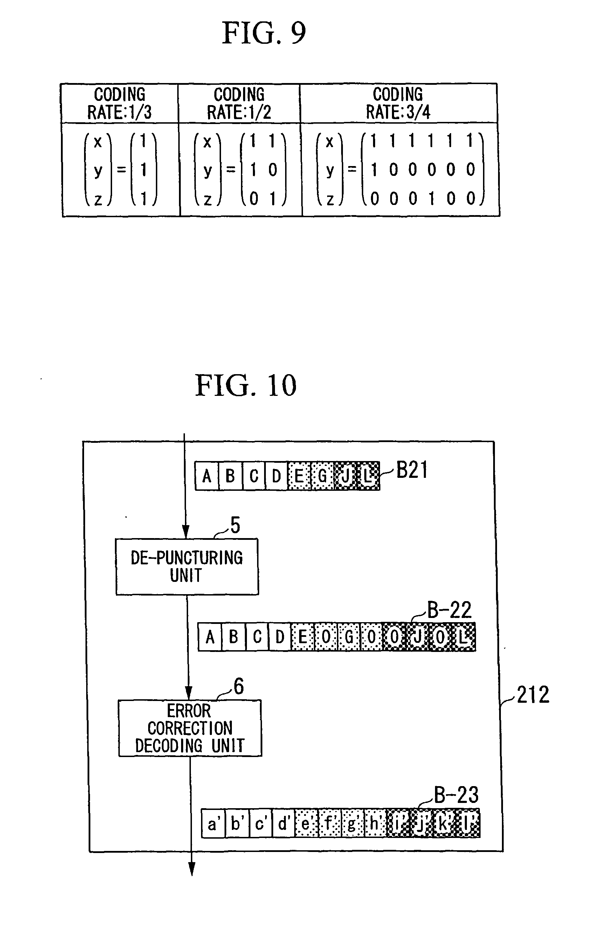

The puncturing unit 4 performs a puncturing process based on the information bits B-11, the parity bits B-12 output by the encoder 1, and the parity bits B-13 output by the encoder 2, and generates and outputs coded bits B-14 (a, b, c, d, e, g, j, and 1). Some of the information bits B-11 and the parity bits B-12 and B-13 obtained by the encoding process are punctured and a coding rate is changed. For example, the pattern shown in FIG. 9 may be used as a puncturing pattern to be used in the puncturing process.

For example, puncturing patterns of coding rates of 1/3, 1/2, and 3/4 are shown in FIG. 9. In FIG. 9, x, y, and z respectively denote the information bits B-11, the parity bits B-12, and the parity bits B-13. In FIG. 9, 1 within the parentheses indicates a transmission bit, and 0 indicates a non-transmission bit.

In FIG. 8 described above, the case in which the coding rate is 1/2 is shown. Thus, the coding bits B-14 to be transmitted by the first communication device 100a to the second communication device 200a become 8 bits of a, b, c, d, e, g, j, and 1 by the puncturing process, and the remaining 4 bits (f, h, i, and k) are punctured.

FIG. 10 is a diagram illustrating a decoding process for turbo codes according to the first embodiment of the present invention. This decoding process is performed by the signal decoding unit 212 (FIG. 2) of the second communication device 200a. The signal decoding unit 212 includes a de-puncturing unit 5 and an error correction decoding unit 6.

An input signal B-21 (A, B, C, D, E, G, J, and L) as coded bit LLRs is input from the de-interleaving unit 210 (FIG. 2) to the signal decoding unit 212 via the HARQ processing unit 211.

The de-puncturing unit 5 performs a de-puncturing process for the input signal B-21, and outputs a signal B-22 to the error correction decoding unit 6. In the de-puncturing process, initial values (virtual values) are substituted into bits punctured by the puncturing process. For example, zero is used as the initial values.

The error correction decoding unit 6 performs an error correction decoding process for the signal B-22 output by the de-puncturing unit 5, and outputs a signal B-23 (a', b', c', d', e', f', g', h', i', j', k', and l') as decoded bit LLRs.

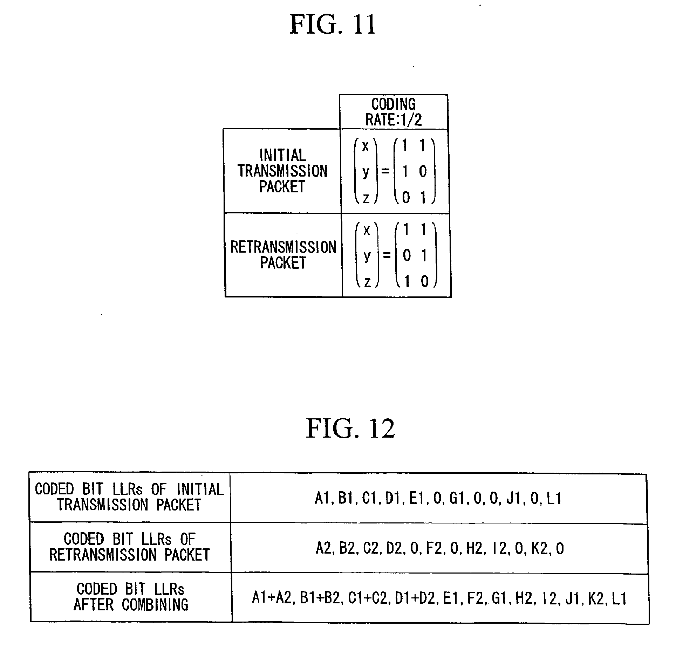

Next, a combining process by the packet combining unit 241 (FIG. 4) will be described. Here, the case of combining coded bit LLRs of an initial transmission packet and a retransmission packet will be described. At this time, a used puncturing pattern is shown in FIG. 11. FIG. 12 is a diagram illustrating an example of a combining process at the time.

The packet combining unit 241 performs a de-puncturing process for coded bit LLRs. Thereafter, the packet combining unit 241 performs combining by adding each of the coded bit LLRs for which the de-puncturing process is performed.

As shown in FIG. 12, coded bit LLRs of the initial transmission packet are A1, B1, C1, D1, E1, 0, G1, 0, 0, J1, 0, and L1. Also, coded bit LLRs of the retransmission packet are A2, B2, C2, D2, 0, F2, 0, H2, I2, 0, K2, and 0.

Combined bit LLRs are A1+A2, B1+B2, C1+C2, D1+D2, E1, F2, G1, H2, I2, J1, K2, and L1.

In the second communication device 200a (FIG. 2) according to the first embodiment of the present invention, the radio reception unit 201 receives an initial transmission signal and at least one retransmission signal from the first communication device 100a (FIG. 1). The iterative detection and decoding unit (the interference cancellation unit 206, the propagation channel compensation unit 208, the demodulation unit 209, the de-interleaving unit 210, the HARQ processing unit 211, the signal decoding unit 212, and the replica signal generation unit 214) performs iterative processes of signal detection and signal decoding for at least one received signal among received signals received by the radio reception unit 201. The packet combining unit 241 of the HARQ processing unit 211 combines a signal detection result obtained from at least one other received signal in one of the iterative processes.

Thereby, it is possible to reduce the number of retransmissions and the number of iterative processes for a signal to be transmitted from the first communication device 100a to the second communication device 200a.

(Second Embodiment)

In this embodiment, a communication system using a hybrid automatic repeat request (HARQ) will be described. In this embodiment, when a second communication device which performs an iterative process using turbo equalization receives a retransmission packet, combining is performed in the iterative process and the reliability of a received signal improved by a retransmission packet is utilized. Thereby, it is possible to reduce the number of retransmissions and the number of iterative processes.

A first communication device according to this embodiment may be implemented by the same block configuration as that of the first communication device 100a shown in FIG 1. The second communication device according to this embodiment is partially different from the second communication device 200a according to the first embodiment shown in FIG 2. Hereinafter, blocks of which functions are different from those of the blocks described in the first embodiment will be mainly described. Blocks of which description is omitted have the same functions as those of the first embodiment.

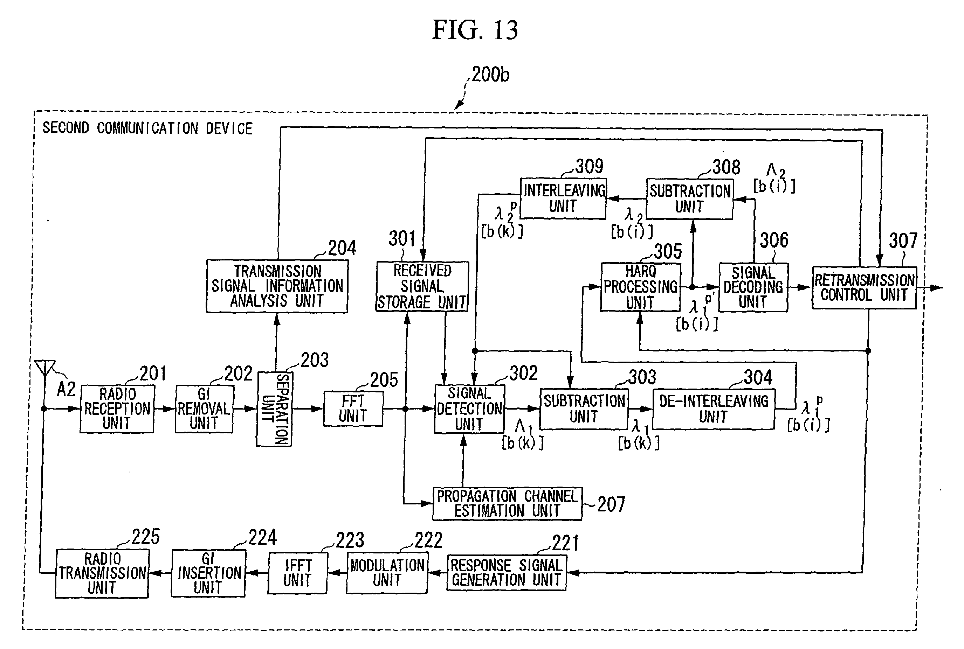

FIG. 13 is a schematic block diagram showing the configuration of the second communication device 200b according to the second embodiment of the present invention. The second communication device 200b according to this embodiment includes a radio reception unit 201 (also referred to as a reception unit), a GI removal unit 202, a separation unit 203, a transmission signal information analysis unit 204, an FFT unit 205, a propagation channel estimation unit 207, a retransmission control unit 307, a response signal generation unit 221, a modulation unit 222, an IFFT unit 223, a GI insertion unit 224, a radio transmission unit 225, a received signal storage unit 301, a signal detection unit 302, a subtraction unit 303, a de-interleaving unit 304, an HARQ processing unit 305, a signal decoding unit 306, a subtraction unit 308, an interleaving unit 309, and an antenna A2.

The signal detection unit 302, the subtraction unit 303, the de-interleaving unit 304, the HARQ processing unit 305, the signal decoding unit 306, the subtraction unit 303, and the interleaving unit 309 are collectively referred to as an iterative detection and decoding unit.

Next, the case where the second communication device 200b receives an initial transmission packet will be described.

First, an initial process for an initial transmission packet will be described. A signal output by the FFT unit 205 is input to the signal detection unit 302, the propagation channel estimation unit 207, and the received signal storage unit 301. The received signal storage unit 301 stores a received signal of an initial transmission packet so as to perform an iterative process when a retransmission packet is received as described later.

The signal detection unit 302 performs a signal detection process based on the received signal, a priori log likelihood ratio (LLR) output by the interleaving unit 309, and a propagation channel estimation result of the propagation channel estimation unit 207. Specifically, the signal detection unit 302 produces a posteriori LLR (a posteriori information) of each coded bits when a received signal vector r(t) is given, and outputs the produced a posteriori LLR to the subtraction unit 303. $\Lambda_1[b(k)]$ denoting the a posteriori LLR is expressed by the following Equation (4).

[Equation 4]

$$\Lambda_1[b(k)] = \log \frac{\Pr[b(k) = +1 \mid r(t)]}{\Pr[b(k) = -1 \mid r(t)]} \quad \cdots \quad (4)$$

Here, b(k) denotes a transmission signal after the interleaving unit 102 (FIG. 1) of the first communication device 100a performs the interleaving process. Pr[b(k)|r(t)] denotes a conditional probability, which is an actually transmitted code b(k) when r(t) is received. The a posteriori LLR is expressed by the following Equation (5) from Bayes' theorem.

[Equation 5]

$$\Lambda_1[b(k)] = \log \frac{\Pr[r(t) \mid b(k) = +1]}{\Pr[r(t) \mid b(k) = -1]} + \log \frac{\Pr[b(k) = +1]}{\Pr[b(k) = -1]} \quad \cdots \quad (5)$$

Pr[r(t)|b(k)] denotes a conditional probability of receiving r(t) under condition that b(k) is transmitted. Here, the relationship between the followings Equation (6) and Equation (7) is established.

[Equation 6]

$$\lambda_1[b(k)] = \log \frac{\Pr[r(t) \mid b(k) = +1]}{\Pr[r(t) \mid b(k) = -1]} \quad \cdots \quad (6)$$

[Equation 7]

$$\lambda_2^p[b(k)] = \log \frac{\Pr[b(k) = +1]}{\Pr[b(k) = -1]} \quad \cdots \quad (7)$$

$\lambda_2^p[b(k)]$ is referred to as a priori LLR (a priori information) for b(k), which is provided by a feedback from a channel decoder. $\lambda_1[b(k)]$ is referred to as an external LLR (external information) when a received vector r(t) and $\lambda_2^p[b(k')]$ (only k'=k) as a priori LLR are known. At the time of the initial process, $\lambda_2^p[b(k)]=0$.

The subtraction unit 303 subtracts the a priori LLR, $\lambda_2^p[b(k)]$, from the a posteriori LLR, $\Lambda_1[b(k)]$, from the signal detection unit 302, and outputs $\lambda_1[b(k)]$ as the external LLR. In this regard, the subtraction unit 303 directly outputs the a posteriori LLR, $\Lambda_1[b(k)]$, as $\lambda_1[b(k)]$ which is the external LLR at the time of the initial process.

The de-interleaving unit 304 outputs $\lambda_1^p[b(i)]$ as a priori LLR to the signal decoding unit 306 by performing a de-interleaving process for $\lambda_1[b(k)]$ as the external LLR. Here, b(i) denotes a transmission signal before the interleaving unit 102 (FIG. 1) of the first communication device 100a performs the interleaving process.

In the case of the initial process, the combined packet storage unit 242 (FIG. 4) provided in the HARQ processing unit 305 stores $\lambda_1^p[b(i)]$ as the a priori LLR. The packet combining unit 241 (FIG. 4) outputs $\lambda_1^{p'}[b(i)]$ as a priori LLR after combining by combining the a priori LLR stored by the combined packet storage unit 242 with the a priori LLR output by the de-interleaving unit 304. In this regard, the packet combining unit 241 directly outputs an input signal in the case of the initial transmission packet.

The error correction decoding unit 251 (FIG. 5) provided in the signal decoding unit 306 produces a posteriori LLR using $\lambda_1^{p'}[b(i)]$ as the a priori LLR after combining by the following Equation (8).

[Equation 8]

$$\Lambda_2[b(i)] = \log \frac{\Pr[b(i) = +1 \mid \{\lambda_1^{p'}[b(i)]\}_{i=0}^{M-1}]}{\Pr[b(i) = -1 \mid \{\lambda_1^{p'}[b(i)]\}_{i=0}^{M-1}]} \quad \cdots \quad (8)$$

Here, M denotes a frame length. The error detection unit 252 (FIG 5) performs error correction by hard decision for information bits of the a posteriori LLR produced by the error correction decoding unit 251, or the like. When no error is detected, the signal decoding unit 306 ends the iterative process, and outputs decoded bits and error detection information to the retransmission control unit 307. When an error is detected, the signal decoding unit 306 performs the iterative process.

Next, the iterative process of the initial transmission packet will be described. The signal decoding unit 306 outputs the a posteriori LLR produced by the error correction decoding unit 251 (FIG. 5) to the subtraction unit 308. Here, $\Lambda_2[b(i)]$ denoting the a posteriori LLR is expressed by the following Equation (9) from Bayes' theorem.

[Equation 9]

$$\Lambda_2[b(i)] = \lambda_2[b(i)] + \lambda_1^{p'}[b(i)] \quad \cdot \cdot \cdot \quad (9)$$

$\lambda_2[b(i)]$ is also referred as the external LLR (external information), and is expressed as information of $\lambda_1^p[b(i')]$, as a priori LLR, and b(i) obtained from a trellis structure of an error correction code.

The subtraction unit 308 outputs $\lambda_2[b(i)]$ as the external LLR to the interleaving unit 309 by subtracting $\lambda_1^{p'}[b(i)]$ as a priori LLR after combining from $\Lambda_2[b(i)]$ as a posteriori LLR. The interleaving unit 309 performs an interleaving process for $\lambda_2[b(i)]$ as the external LLR, and outputs $\lambda_2^p[b(k)]$ as a priori LLR for the signal detection unit 306 to the signal detection unit 302 and the subtraction unit 303.

The signal detection unit 302 produces a posteriori LLR, $A_1[b(k)]$, based on $\lambda_2^p[b(k)]$ as the a priori LLR input from the interleaving unit 309 and the received initial transmission packet.

Thereafter, the iterative process is performed until the error detection unit 252 (FIG. 5) determines to end the iterative process.

Next, the case where the second communication device 200b receives a retransmission packet will be described. When identifying that the received signal is the retransmission packet based on transmission signal information, the retransmission control unit 307 generates retransmission control information for performing a retransmission process for the received signal, and outputs the retransmission control information to the HARQ processing unit 305 and the received signal storage unit 301.

Hereinafter, the initial process when the retransmission packet is received will be described. A retransmission packet signal output by the FFT unit 205 is input to the signal detection unit 302 and the propagation channel estimation unit 207. The signal detection unit 302 produces $\Lambda_1[b(k)]$ as the a posteriori LLR from the received signal vector r(t), and outputs $\Lambda_1[b(k)]$ to the subtraction unit 303. At this time, $\lambda_2^p[b(k)]$ as a priori LLR is 0.

The subtraction unit 303 directly outputs $\Lambda_1[b(k)]$ which is the a posteriori LLR output by the signal detection unit 302 as $\lambda_1[b(k)]$ which is the external LLR.

The de-interleaving unit 304 performs a de-interleaving process for $\lambda_1[b(i)]$ as the external LLR, and outputs $\lambda_1^p[b(i)]$ as a priori LLR for the signal decoding unit 306 to the HARQ processing unit 305.

The retransmission control information output by the retransmission control unit 307 and $\lambda_1^p[b(i)]$ as the a priori LLR output by the de-interleaving unit 304 are input to the HARQ processing unit 305. Based on the retransmission control information, the combined packet storage unit 242 (FIG. 4) outputs a priori LLR obtained in the initial process of the stored initial transmission packet based on the retransmission control information to the packet combining unit 241.

The packet combining unit 241 (FIG. 4) outputs $\lambda_1^{p'}[b(i)]$ as a priori LLR after combining by combining the a priori LLR of the initial transmission packet output by the combined packet storage unit 242 with the a priori LLR of the retransmission packet output by the de-interleaving unit 304.

The error correction decoding unit 251 (FIG. 5) provided in the signal decoding unit 306 produces $\Lambda_2[b(i)]$ as a posteriori LLR using $\lambda_1^{p'}[b(i)]$ as the a priori LLR after combining, and outputs $\Lambda_2[b(i)]$ to the error detection unit 252. The error detection unit 252 (FIG. 5) performs error detection by hard decision for information bits of the a posteriori LLR produced by the error correction decoding unit 251, or the like.

When no error is detected, the signal decoding unit 306 ends the iterative process, and outputs the decoded bits and error detection information to the retransmission control unit 307. When an error is detected, the signal decoding unit 306 performs the iterative process.

Next, the case where the second communication device 200b performs the iterative process when an error is detected in the error correction decoding result of data obtained by combining the demodulation result of the initial transmission packet and the demodulation result of the retransmission packet after a retransmission packet is received will be described.

The signal decoding unit 306 outputs the a posteriori LLR produced by the error correction decoding unit 251 (FIG. 5) to the subtraction unit 308. The subtraction unit 308 outputs $\lambda_2[b(i)]$ as the external LLR to the interleaving unit 309 by subtracting $\lambda_1^{p'}[b(i)]$ as a priori LLR after combining from $\Lambda_2[b(i)]$ as a posteriori LLR.

The interleaving unit 309 performs an interleaving process for $\lambda_2[b(i)]$ as the external LLR, and outputs $\lambda_2^{p}[b(k)]$ as a priori LLR for the signal detection unit 302 to the signal detection unit 302 and the subtraction unit 303.

Based on the input retransmission control information, the received signal storage unit 301 outputs a received signal of the stored initial transmission packet to the signal detection unit 302.

The signal detection unit 302 produces a posteriori LLR, $\Lambda_1[b(k)]$, based on $\lambda_2^{p}[b(k)]$ as the input a priori LLR and the received signal of the initial transmission packet.

Thereafter, the subtraction unit 303 and the de-interleaving unit 304 perform the same process as the above-described process. The HARQ processing unit 305 directly outputs the input signal without combining packets at the time of the iterative process. The signal decoding unit 306 performs the same process as the above-described process. Thereafter, the iterative process is performed until the error detection unit 252 (FIG. 5) determines to end the iterative process.

Using this embodiment, a communication system using a hybrid automatic repeat request (HARQ) is able to achieve the following functions and effects. That is, when a retransmission packet is received, the second communication device 200b, which performs the iterative process using turbo equalization, performs combining in an iterative process and uses the reliability of a received signal improved by the retransmission packet. Thereby, it is possible to reduce the number of retransmissions and the number of iterative processes.

MLD (Maximum Likelihood Decoding), MAP (Maximum A posteriori Probability), log-MAP, Max-log-MAP, SOVA (Soft Output Viterbi Algorithm), and the like may be used as a signal detection method and a signal decoding method, but they are not limited thereto.

The HARQ processing unit 305 uses a priori LLR obtained by an initial process as an initial transmission packet to be combined in the above description, but is not limited thereto. For example, a priori LLR obtained by the last iterative process may be used as the initial transmission packet to be combined. Also, any of a-priori LLRs obtained by iterative processes may be used. For example, a priori LLR having the highest likelihood may be used.

The HARQ processing unit 305 uses a priori LLR obtained by an initial process as a retransmission packet to be combined in the above description, but is not limited thereto. For example, a-priori LLRs obtained by iterative processes of a preset number of iterations may be used as the retransmission packet to be combined. Any of a-priori LLRs obtained by a plurality of iterative processes may be used. For example, a priori LLR having the highest likelihood may be used.

The case where a retransmission request to the first communication device 100a is made after the second communication device 200b receives the initial transmission packet from the first communication device 100a has been described above. The case of combining two packets when the second communication device 200b receives a retransmission packet has been described, but the present invention is not limited thereto.

For example, when at least two retransmission packets are received, the second communication device 200b may combine results after demodulation processes for all received packets. The second communication device 200b may combine results after demodulation processes for at least two packets among all the received packets.

The case of performing the iterative process when an error is detected in the error correction decoding result of data obtained by combining the demodulation result of an initial transmission packet and the demodulation result of a retransmission packet after the retransmission packet is received has been described. The case of using a received signal of an initial transmission packet stored by the received signal storage unit 301 as a received signal for performing a signal detection process has been described, but the present invention is not limited thereto. For example, the retransmission packet may be used as a received signal for performing interference cancellation.

The case of using a multicarrier signal as a transmission/reception signal has been described above, but a single carrier signal may be used.

The case of using the interleaving unit 309 and the de-interleaving unit 304 has been described, but the present invention is not limited thereto.

The case where the second communication device 200b performs an iterative process using frequency-domain turbo equalization has been described, but the present invention is not limited thereto. For example, the second communication device 200b may perform an iterative process using time-domain turbo equalization.

This embodiment is also applicable to the second communication device 200b, which performs stream separation upon MIMO (Multi-Input Multi-Output) transmission. When the stream separation is performed upon MIMO transmission, a stream separation unit which separates a plurality of spatially multiplexed streams may be provided in the second communication device 200b.

(Third Embodiment)

In this embodiment, a communication system using a hybrid automatic repeat request (HARQ) which performs chase combining will be described. The case of combining signals after FFT for an initial transmission packet and a retransmission packet and utilizing the reliability of a received signal improved by the retransmission packet when a second communication device, which performs the iterative process using an interference canceller, receives a retransmission packet will be described. Thereby, it is possible to reduce the number of retransmissions and the number of iterative processes.

A first communication device according to this embodiment may be implemented by the same block configuration as that of the first communication device 100a shown in FIG. 1. The second communication device according to this embodiment is partially different from the second communication device 200a according to the first embodiment shown in FIG 2. Hereinafter, blocks of which functions are different from those of the blocks described in the first embodiment will be mainly described. Blocks of which description is omitted have the same functions as those of the first embodiment.

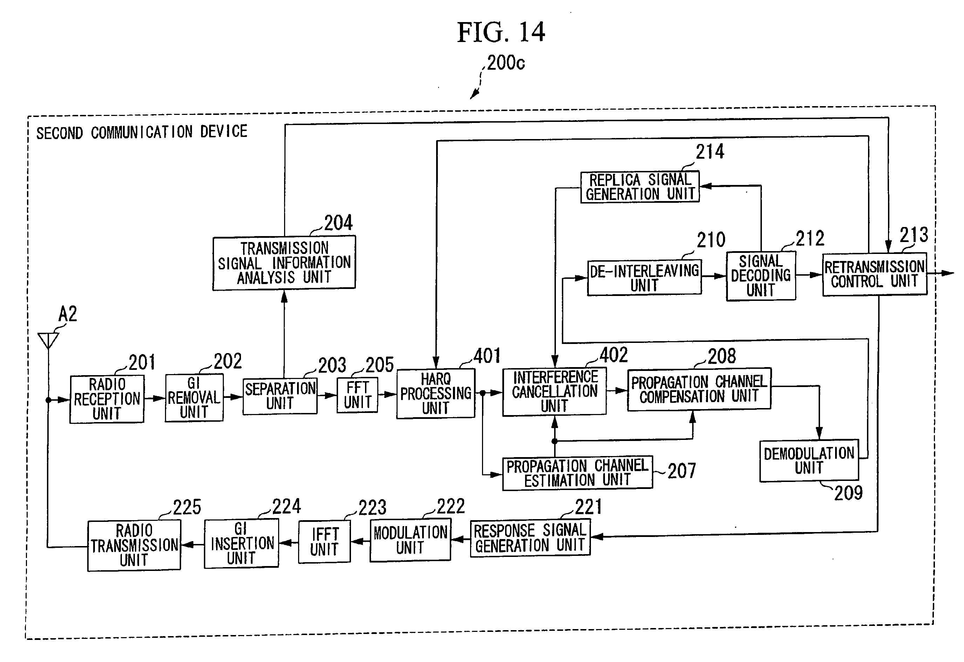

FIG. 14 is a schematic block diagram showing the configuration of a second communication device 200c according to the third embodiment of the present invention. The second communication device 200c includes a radio reception unit 201 (also referred to as a reception unit), a GI removal unit 202, a separation unit 203, a transmission signal information analysis unit 204, an FFT unit 205, an interference cancellation unit 402 (also referred to as an interference removal unit), a propagation channel estimation unit 207, a propagation channel compensation unit 208, a demodulation unit 209, a de-interleaving unit 210, an HARQ processing unit 401, a signal decoding unit 212, a replica signal generation unit 214, a retransmission control unit 213, a response signal generation unit 221, a modulation unit 222, an IFFT unit 223, a GI insertion unit 224, a radio transmission unit 225, and an antenna A2. Differences from the configuration of the second communication device 200a according to the first embodiment are the position and process of the HARQ processing unit and the configuration of the interference cancellation unit.

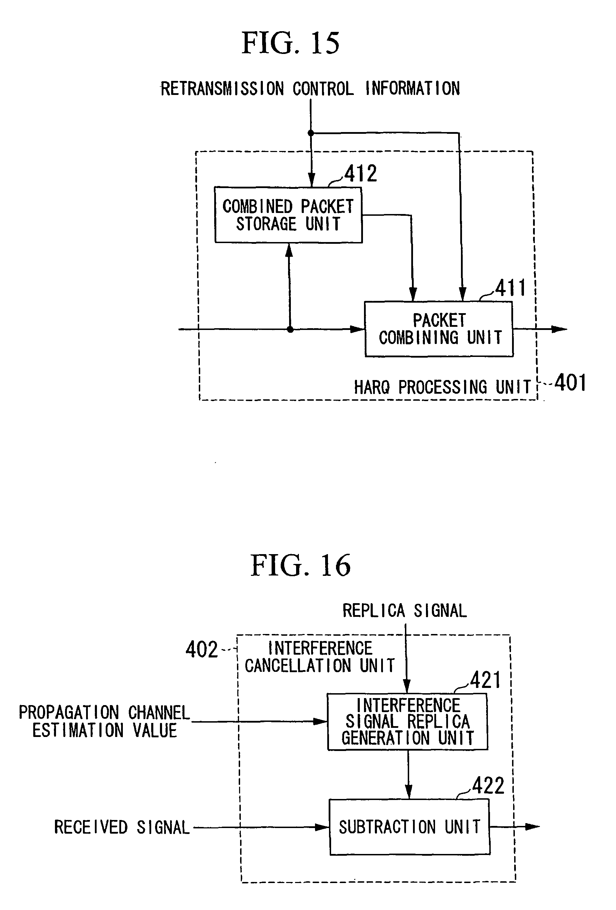

FIG. 15 is a schematic block diagram showing the configuration of the HARQ processing unit 401 according to the third embodiment of the present invention. The HARQ processing unit 401 includes a packet combining unit 411 and a combined packet storage unit 412.

FIG. 16 is a schematic block diagram showing the configuration of the interference cancellation unit 402 according to the third embodiment of the present invention. The interference cancellation unit 402 includes an interference signal replica generation unit 421 and a subtraction unit 422. A difference from the first embodiment is that the received signal storage unit 223 (FIG. 3) is not installed. The processes of the interference signal replica generation unit 421 and the subtraction unit 422 are the same as those of the first embodiment.

First, the case where the second communication device 200c receives an initial transmission packet will be described.

A received signal of the initial transmission packet output from the FFT unit 205 is input to the HARQ processing unit 401. The combined packet storage unit 412 stores an initial transmission packet input to the combined packet storage unit 412 for combining with a retransmission packet.

The packet combining unit 411 performs HARQ combining, but directly outputs an input signal in the case of the initial transmission packet.

A signal output from the HARQ processing unit 401 is input to the interference cancellation unit 402. The subtraction unit 422 (FIG. 16) cancels an interference signal by subtracting an interference signal replica generated by the interference signal replica generation unit 421 from a received signal. In this regard, the subtraction unit 422 directly outputs the received signal in the case of an initial process. Here, there is multi-code interference, inter-carrier interference, or the like as the interference signal. When a packet is code-multiplexed, there is also multi-code interference as the interference signal. The interference signal is not limited thereto.

Thereafter, the second communication device 200c performs the same process as that of the first embodiment.

Next, the case where the second communication device 200c receives a retransmission packet from the first communication device 100a will be described.

When identifying that a received signal is the retransmission packet based on received signal information, the retransmission control unit 213 generates retransmission control information for performing a retransmission process for the received signal, and outputs the generated retransmission control information to the HARQ processing unit 401.

The received signal of the retransmission packet output from the FFT unit 205 is input to the HARQ processing unit 401. The combined packet storage unit 412 stores the input received signal of the retransmission packet. The combined packet storage unit 412 (FIG. 15) of the HARQ processing unit 401 outputs the received signal of the stored initial transmission packet to the packet combining unit 411 based on the retransmission control information from the retransmission control unit 213.

The packet combining unit 411 combines and outputs the input received signal of the retransmission packet and the received signal of the initial transmission packet stored in the combined packet storage unit 412.

Thereafter, the second communication device 200c performs the same process as that of the first embodiment based on the received signals combined by the packet combining unit 411.

The case of disposing the HARQ processing unit 401 at the output side of the FFT unit 205 and combining a frequency domain signal has been described above, but the present invention is not limited thereto. For example, it may be disposed at the output side of the radio reception unit 201 or the output side of the GI removal unit 202.

The configuration of the second communication device 200c according to this embodiment is also applicable to the second communication device 200b of the second embodiment.


(Fourth Embodiment)

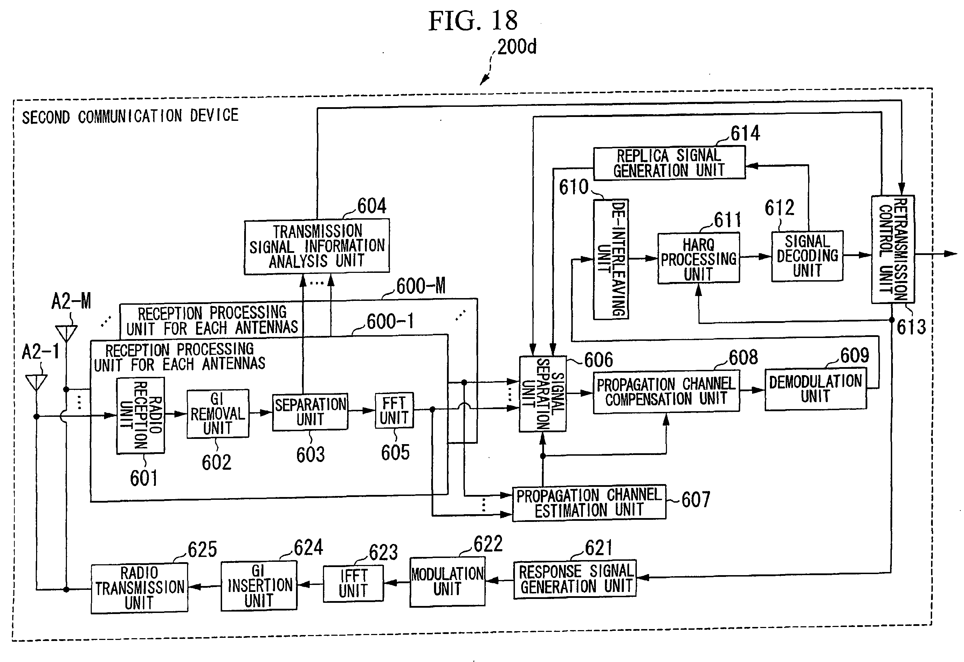

In this embodiment, a communication system which performs MIMO (Multi-Input Multi-Output) transmission using a hybrid automatic repeat request (HARQ) will be described. The case of performing combining in an iterative process and utilizing the reliability of a received signal improved by the retransmission packet when a second communication device 200d (see FIG. 18 to be described later) which performs signal separation by the iterative process receives a retransmission packet will be described. Thereby, it is possible to reduce the number of retransmissions and the number of iterative processes.

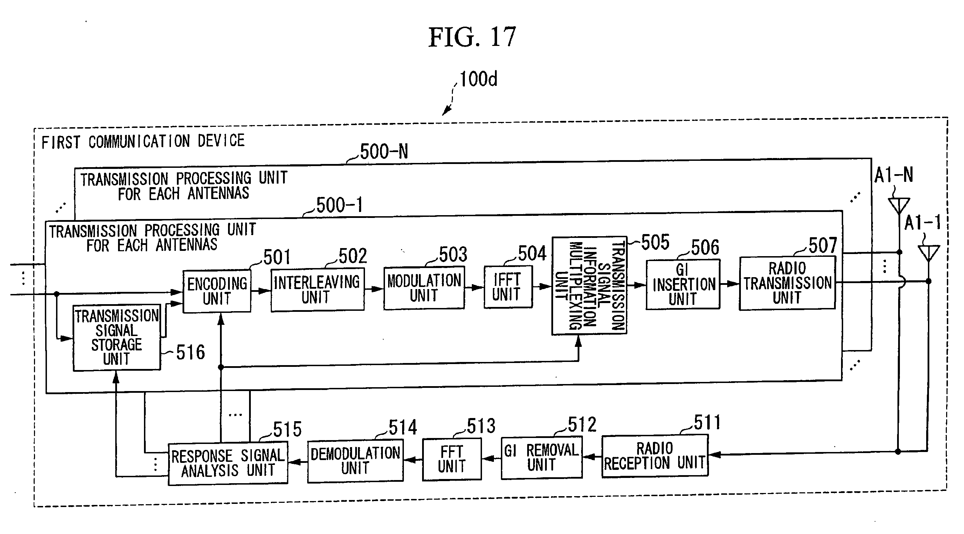

FIG. 17 is a schematic block diagram showing the configuration of a first communication device 100d according to the fourth embodiment of the present invention. The first communication device 100d includes transmission processing units 500-1 to 500-N for each antennas, a response signal analysis unit 515, a demodulation unit 514, an FFT unit 513, a GI removal unit 512, a radio reception unit 511, and antennas A1-1 to A1-N. The transmission processing units 500-1 to 500-N for each antennas respectively include an encoding unit 501, an interleaving unit 502, a modulation unit 503, an IFFT unit 504, a transmission signal information multiplexing unit 505, a GI insertion unit 506, a radio transmission unit 507 (also referred to as a transmission unit), and a transmission signal storage unit 516.

The first communication device 100d according to this embodiment transmits a signal to a second communication device 200d by the N transmission antennas.

In the first communication device 100d, information bits (a packet) for each antenna to be transmitted to the second communication device 200d are input to the transmission processing units 500-1 to 500-N for each antennas. Here, the case of transmitting one packet for each of the antennas A1-1 to A1-N will be described. That is, the case of transmitting N packets by the N antennas will be described, but the present invention is not limited thereto. A signal into which a plurality of packets is MIMO-multiplexed (spatially multiplexed) is referred to as a frame.

In the transmission processing units 500-1 to 500-N for each antennas, input information bits are input to the encoding unit 501, and are also input to the transmission signal storage unit 516.

The transmission signal storage unit 516 stores information bits so as to retransmit the transmitted information bits when there is a retransmission request from the second communication device 200d.

The encoding unit 501 performs error correction coding for input information bits by a convolutional code, a turbo code, an LDPC code, or the like, and outputs the coded bits to the interleaving unit 502.

The interleaving unit 502 performs an interleaving process for the coded bits and outputs the interleaved bits to the interleaving unit 502.

The modulation unit 503 maps an interleaved signal to a modulation symbol of QPSK, 16QAM, or the like, and outputs the modulation symbol to the IFFT unit 504.

The IFFT unit 504 performs frequency-time conversion for the modulation symbol by IFFT or the like, and outputs the frequency-time conversion result to the transmission signal information multiplexing unit 505.

The transmission signal information multiplexing unit 505 multiplexes transmission signal information indicating whether a corresponding packet is an initial transmission packet or a retransmission packet, and outputs the multiplexed transmission signal information to the GI insertion unit 506.

It is preferable to transmit each transmission signal information to be separated at the receiver. For example, transmission is performed using time division multiplexing, frequency division multiplexing, code division multiplexing, MIMO multiplexing, or the like.

The GI insertion unit 506 inserts a guard interval (GI) into a frequency-time converted signal, and outputs the signal to the radio transmission unit 507.

The radio transmission unit 507 performs digital-analog conversion, frequency conversion, and the like for the signal into which the guard interval (GI) is inserted, and transmits the signal to the second communication device 200d via the antennas A1-1 to A1-N.

The radio reception unit 511 receives a signal including a response signal for each packet (for each of the transmission antennas A1-1 to A1-N) transmitted by the second communication device 200d. The radio reception unit 511 performs frequency conversion, analog-digital conversion, and the like, and outputs the conversion result to the GI removal unit 512.

The GI removal unit 512 removes a guard interval (GI) from the signal output by the radio reception unit 511, and outputs the signal to the demodulation unit 514.

The FFT unit 513 converts the signal output by the GI removal unit 512 from a time domain signal into a frequency domain signal, and outputs the converted signal to the demodulation unit 514.

The demodulation unit 514 demodulates the signal output by the FFT unit 513 and outputs the demodulated signal to the response signal analysis unit 515.

The response signal analysis unit 515 analyzes a response signal for each packet based on the signal demodulated by the demodulation unit 514, and analyzes whether information bits transmitted by the first communication device 100d to the second communication device 200d are ACK or NACK. The response signal analysis unit 515 respectively outputs the analysis result to the transmission signal storage units 516 of the transmission processing units 500-1 to 500-N for each antennas, the encoding units 501, and the transmission signal information multiplexing units 505. Thereby, the NACK packet is retransmitted from the first communication device 100d to the second communication device 200d.

FIG. 18 is a schematic block diagram showing the configuration of the second communication device 200d according to the fourth embodiment of the present invention. The second communication device 200d includes reception processing units 600-1 to 600-M for each antennas, a transmission signal information analysis unit 604, a signal separation unit 606 (also referred to as a packet separation unit, a stream separation unit, or an interference removal unit), a propagation channel estimation unit 607, a propagation channel compensation unit 608, a demodulation unit 609, a de-interleaving unit 610, an HARQ processing unit 611, a signal decoding unit 612, a replica signal generation unit 614, a retransmission control unit 613, a response signal generation unit 621, a modulation unit 622, an IFFT unit 623, a GI insertion unit 624, a radio transmission unit 625, and antennas A2-1 to A2-M.

The reception processing units 600-1 to 600-M for each antennas respectively include a radio reception unit 601 (also referred to as a reception unit), a GI removal unit 602, a separation unit 603, and an FFT unit 605.

The signal separation unit 606, the propagation channel compensation unit 608, the demodulation unit 609, the de-interleaving unit 610, the HARQ processing unit 611, the signal decoding unit 612, and the replica signal generation unit 614 are collectively referred to as an iterative detection and decoding unit.

The signal separation unit 606, the propagation channel compensation unit 608, and the demodulation unit 609 are collectively referred to as a signal detection unit.

The second communication device 200d according to this embodiment receives signals from the first communication device 100d by the M reception antennas.

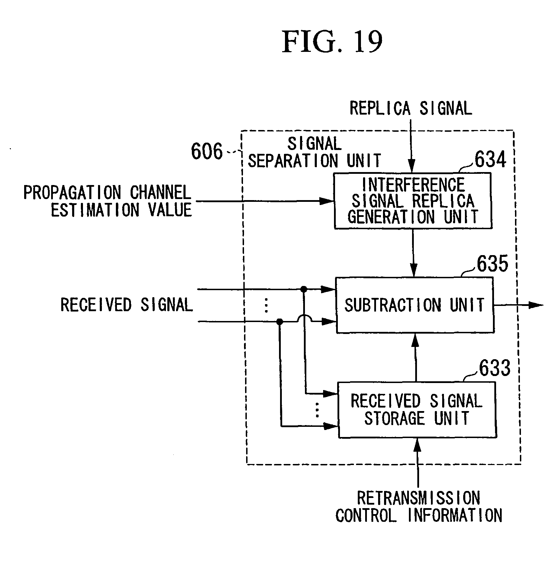

FIG. 19 is a schematic block diagram showing the configuration of the signal separation unit 606 according to the fourth embodiment of the present invention. The signal separation unit 606 includes an interference replica generation unit 634, a subtraction unit 635, and a received signal storage unit 633.

The HARQ processing unit 611, the signal decoding unit 612, and the replica signal generation unit 614 according to this embodiment are the same as those of the first embodiment.

Hereinafter, the case where a first frame is received by the second communication device 200d will first be described. Here, the case where all packets spatially multiplexed into the first frame are initial transmission packets will be described. Signals received by the M reception antennas A2-1 to A2-M are respectively input to the reception processing units 600-1 to 600-M for each antennas.

The radio reception unit 601 performs frequency conversion, analog-digital conversion, and the like for the received signal, and outputs the converted signal to the GI removal unit 602.

The GI removal unit 602 removes a guard interval (GI) from the signal output by the radio reception unit 601, and outputs the signal to the separation unit 603.

The separation unit 603 separates the signal output by the GI removal unit 602 into transmission signal information and a signal including information bits.

The separation unit 603 outputs the transmission signal information to the transmission signal information analysis unit 604, and outputs the signal including the information bits to the FFT unit 605.

The transmission signal information analysis unit 604 analyzes whether each packet transmitted by the first communication device 100d is an initial transmission packet or a retransmission packet based on transmission signal information received by the respective reception antennas A2-1 to A2-M. The transmission signal information analysis unit 604 outputs the analysis result to the retransmission control unit 613.

The FFT unit 605 performs time-frequency conversion for the signal including the information bits, and outputs the converted signal to the signal separation unit 606 and the propagation channel estimation unit 607.

Here, in a MIMO system in which the number of transmission antennas and the number of reception antennas are respectively $N \times M$, a received signal $R(k)$ in a k-th subcarrier is expressed by the following Equations (10) to (14).

[Equation 10]

$$R(k) = H(k)S(k) + N(k) \quad \cdots \quad (10)$$

[Equation 11]

$$R(k) = \begin{bmatrix} R_1(k) & \cdots & R_M(k) \end{bmatrix}^T \quad \cdots \quad (11)$$

[Equation 12]

$$H(k) = \begin{pmatrix} H_{11}(k) & \cdots & H_{1N}(k) \\ \vdots & \ddots & \vdots \\ H_{M1}(k) & \cdots & H_{MN}(k) \end{pmatrix} \quad \cdots \quad (12)$$

[Equation 13]

$$S(k) = \begin{bmatrix} S_1(k) & \cdots & S_N(k) \end{bmatrix}^T \quad \cdots \quad (13)$$

[Equation 14]

$$N(k) = \begin{bmatrix} N_1(k) & \cdots & N_M(k) \end{bmatrix}^T \quad \cdots \quad (14)$$

In this regard, H(k) is each of propagation channel characteristics among the transmission antennas A1-1 to A1-N and the reception antennas A2-1 to A2-M. S(k) is a transmission signal for each of the transmission antennas A1-1 to A1-N. N(k) is second communication device noise for each of the reception antennas A2-1 to A2-M. The superscript T denotes a transpose matrix.

The propagation channel estimation unit 607 estimates the propagation channel characteristics H(k) based on received signals from the respective reception antennas A2-1 to A2-M, and outputs the estimation results to the signal separation unit 606 and the propagation channel compensation unit 608.

An estimated propagation channel estimation value is output to each of the reception antennas A2-1 to A2-M.

The propagation channel estimation unit 607 stores a propagation channel estimation value for each received packet until information bits transmitted by the first communication device 100d may be appropriately received by the second communication device 200d.

A propagation channel estimation value is produced based on a frequency domain signal output by the FFT unit 605 in this embodiment, but is not limited thereto. For example, a propagation channel estimation value may be produced based on a previous time domain signal input to the FFT unit 605.

For example, a method of using a pilot signal including known information between the first communication device 100d and the second communication device 200d may be used as a method of propagation channel estimation to be performed by the propagation channel estimation unit 607, but it is not limited thereto.

A signal for each of the reception antennas A2-1 to A2-M output by the respective reception processing units 600-1 to 600-M for each antennas is input to the signal separation unit 606.

Hereinafter, the operations of the signal separation unit 606 and the propagation channel compensation unit 608 of the initial process will be described. Since a replica signal is not generated in the initial process, the signal separation unit 606 directly outputs an input signal to the propagation channel compensation unit 608.

The received signal storage unit 633 (FIG. 19) provided in the signal separation unit 606 stores a signal input to the signal separation unit 606 for each of the reception antennas A2-1 to A2-M. It is possible to use the signal stored in the received signal storage unit 633 as a received signal for performing an iterative process for the first frame once again by combining the reception result of a second frame when the second frame is received.

The propagation channel compensation unit 608 extracts S(k) from R(k) by multiplying a weight coefficient of a ZF criterion or an MMSE criterion. Thus, in an initial process, signal separation and propagation channel compensation are simultaneously performed in the propagation channel compensation unit 608. As a weight coefficient to be used in the initial process, for example, there is a weight coefficient $W_{ZF}(k)$ of the ZF criterion or a weight coefficient $W_{MMSE}(K)$ of the MMSE criterion. The weight coefficient $W_{ZF}(k)$ of the ZF criterion and the weight coefficient $W_{MMSE}(k)$ of the MMSE criterion may be respectively expressed by the following Equations (15) and (16).

[Equation 15]

$$\mathbf{W}_{ZF}(k) = \mathbf{H}^H(k)\left(\mathbf{H}(k)\mathbf{H}^H(k)\right)^{-1} \text{ or } \left(\mathbf{H}^H(k)\mathbf{H}(k)\right)^{-1}\mathbf{H}^H(k) \quad \cdots \quad (15)$$

[Equation 16]

$$\mathbf{W}_{MMSE}(k) = \mathbf{H}^H(k)(\mathbf{H}(k)\mathbf{H}^H(k) + \sigma^2\mathbf{I}_M)^{-1} \text{ or } (\mathbf{H}^H(k)\mathbf{H}(k) + \sigma^2\mathbf{I}_N)^{-1}\mathbf{H}^{H(k)} \quad \cdots \quad (16)$$

In this regard, the superscript H is the complex conjugate transpose of a matrix, the superscript -1 is an inverse matrix, $\sigma^2$ is noise power, and IN is an N×N unit matrix. Here, linear processes of the ZF criterion and the MMSE criterion have been described, but a non-linear process as in an ML (Maximum Likelihood) criterion may be used.

Next, the operations of the signal separation unit 606 and the propagation channel compensation unit 608 of an iterative process of an iterative detection and decoding process (the second and subsequent times) for the first frame will be described. At the time of the iterative process, a transmission signal replica output by the replica signal generation unit 614 to be described later is input to the signal separation unit 606.

The signal separation unit 606 performs signal separation by generating an interference signal out of a packet intended to be extracted based on a transmission signal replica and a propagation channel estimation value, and subtracting the generated interference signal from the received signal. Here, the case of extracting a packet transmitted from the p-th (1≤p≤N) transmission antennas A1-1 to A1-N will be described. A transmission signal replica S'(k) input to the signal separation unit 606 is expressed by the following Equation (17).

[Equation 17]

$$\mathbf{S}'(k) = \begin{bmatrix} S_1'(k) & \cdots & S_{p-1}'(k) & S_p'(k) & S_{p+1}'(k) & \cdots & S_N'(k) \end{bmatrix}^T \qquad \cdots \quad (17)$$

The interference signal replica generation unit 634 generates an interference signal replica $R_p(k)$ excluding the packet transmitted from the p-th transmission antenna based on the following Equations (18) and (19).
[Equation 18]

$$\mathbf{R}_p(k) = \mathbf{H}(k)\,\mathbf{S}_p'(k) \qquad \cdots \quad (18)$$

[Equation 19]

$$\mathbf{S}_p'(k) = \begin{bmatrix} S_1'(k) & \cdots & S_{p-1}'(k) & 0 & S_{p+1}'(k) & \cdots & S_N'(k) \end{bmatrix}^T \qquad \cdots \quad (19)$$

The subtraction unit 635 (FIG. 19) extracts a packet transmitted from the p-th transmission antenna by subtracting the interference signal replica $R_p(k)$ from the received signal R(k). The signal separation unit 606 outputs the signal separation result to the propagation channel compensation unit 608 after performing signal separation by extracting all packets.
Hereinafter, the case of performing a process in a packet unit will be described. The propagation channel compensation unit 608 performs propagation channel compensation for the signal separated by the signal separation unit 606 into each packet by using a propagation channel estimation value estimated by the propagation channel estimation unit 607, and outputs the propagation channel compensation result to the demodulation unit 609.
A subsequent process of the demodulation unit 609, the de-interleaving unit 610, the HARQ processing unit 611, the signal decoding unit 612, the retransmission control unit 613, and the replica signal generation unit 614 is the same as that of the first embodiment. In this regard, the process is performed in a packet unit.
The response signal generation unit 621 generates ACK or NACK for each packet based on error detection information output by the retransmission control unit 613, and outputs the generated ACK or NACK to the modulation unit 622. A subsequent process of the modulation unit 622, the IFFT unit 623, the GI insertion unit 624, and the radio transmission unit 625 is the same as that of the first embodiment.
For example, a response signal for each packet may be transmitted using code division multiplexing by orthogonal codes, time division multiplexing, frequency division multiplexing, MIMO multiplexing, or the like, and is not limited thereto.
Next, the case where the second communication device 200d receives the second frame will be described. Here, the second frame is a frame transmitted by the first communication device 100d based on a response signal to the first frame. Hereinafter, the case where all packets of the first frame are NACK and all packets transmitted as initial transmission packets are retransmitted as the second frame will be described.
Received signals received by the M reception antennas A2-1 to A2-M are input to the reception processing units 600-1 to 600-M for each antennas. The reception processing units 600-1 to 600-M for each antennas, the transmission signal information analysis unit 604, and the retransmission control unit 613 perform the same process as in the case where the initial transmission packet is received.
Thereafter, the signal separation unit 606, the propagation channel estimation unit 607, the propagation channel compensation unit 608, the demodulation unit 609, and the de-interleaving unit 610 also perform the same process. The HARQ processing unit 611 performs the same process as that of the first embodiment.
A coded bit LLR of a retransmission packet and retransmission control information output by the retransmission control unit 613 are input to the HARQ processing unit 611.

The combined packet storage unit 242 (FIG. 4) outputs a coded bit LLR obtained in an initial process for the initial transmission packet stored based on retransmission control information to the packet combining unit 241 (FIG. 4). The packet combining unit 241 combines the coded bit LLR of the retransmission packet and the coded bit LLR obtained in the initial process for the initial transmission packet stored in the combined packet storage unit 242 based on the retransmission control information, and outputs the combining result to the signal decoding unit 612. In this regard, the above-described processes are performed for each corresponding packet.

Thereafter, the signal decoding unit 612 and the replica signal generation unit 614 also perform the same process. At the time of the iterative process for the retransmission packet, the signal separation unit 606 performs the iterative process for the first frame as the received signal as in the first embodiment.

The second communication device 200d iteratively performs the above-described process until a packet is received without error or the end of the retransmission process is determined.

This embodiment uses a communication system which performs MIMO (Multi-Input Multi-Output) transmission using a hybrid automatic repeat request (HARQ). When the second communication device 200d which performs signal separation by the iterative process receives a retransmission packet, combining is performed in the iterative process and the reliability of a received signal improved by the retransmission packet is utilized. Thereby, it is possible to reduce the number of retransmissions and the number of iterative processes.

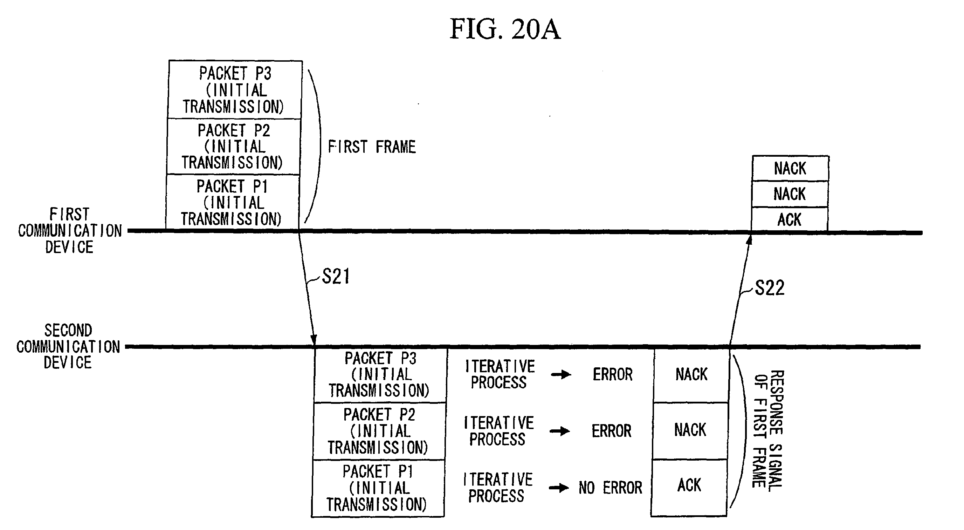

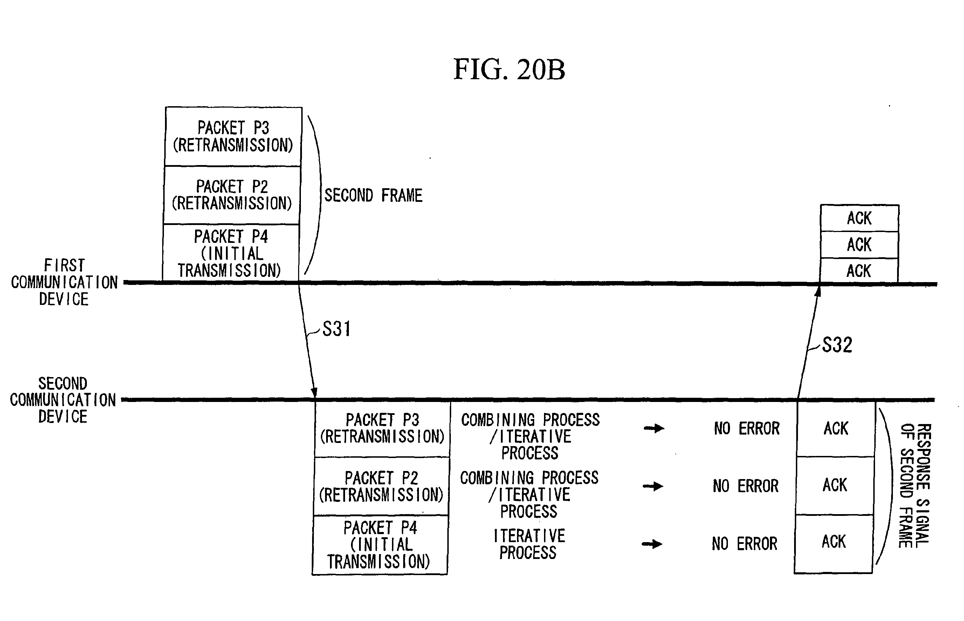

The case where all initial transmission packets are retransmitted has been described in this embodiment, but an initial transmission packet and a retransmission packet may be mixed in MIMO transmission. For example, a method shown in FIGS. 20A and 20B may be used.

FIGS. 20A and 20B are diagrams showing a method of multiplexing 3 packets per frame and transmitting the multiplexed packets from the first communication device 100d to the second communication device 200d. In this case, a number unique to each packet and the number of transmissions are added as transmission signal information.

In the first frame, packets P1 to P3 as initial transmission packets are transmitted from the first communication device 100d to the second communication device 200d (step S21 of FIG. 20A). Here, the case where no error is detected from the packet P1 and an error is detected from the packets P2 and P3 as the result of the already described iterative process in the second communication device 200d will be described. The second communication device 200d transmits a response signal to make a retransmission request for the packets P2 and P3 to the first communication device 100d (step S22 of FIG 20A). At this time, the second communication device 200d stores coded bit LLRs of the packets P2 and P3 so as to perform combining by the hybrid automatic repeat request (HARQ).

Based on the response signal from the second communication device 200d, the first communication device 100d constitutes a second frame of the packets P2 and P3 as retransmission packets and a packet P4 as an initial transmission packet. Likewise, the second frame transmitted by the first communication device 100d is received by the second communication device 200d (step S31 of FIG. 20B). The second communication device 200d performs the iterative process. In the iterative process, the HARQ processing unit 611 performs combining for the retransmitted packets P2 and P3 as described above. As the processing result, no error is detected from all the packets P2 to P4, and ACK is transmitted to the first communication device 100d as the response signal (step S32 of FIG. 20B).

As a received signal for performing signal separation by the signal separation unit 606 so as to receive a packet retransmitted in the second frame in second and subsequent iterative processes when the second frame is received, the first frame may be used and the second frame may be used.

In the iterative process, a maximum LLR at which the replica signal generation unit 614 acquires a hard decision result or a soft decision value may be used for an ACK packet among MIMO-multiplexed packets.

Here, the case where MIMO multiplexing (spatial multiplexing) is used has been described, but the present invention is not limited thereto. Frequency division multiplexing, time division multiplexing, code division multiplexing, IDMA (Interleave Division Multiple Access), or the like may be used.

The HARQ processing unit uses a coded bit LLR obtained by the initial process as an initial transmission packet to be combined in the above description, but is not limited thereto. For example, a coded bit LLR obtained by the last iterative process may be used. Any of coded bit LLRs obtained by respective iterative processes may be used. For example, a coded bit LLR having the highest likelihood may be used.

The HARQ processing unit uses a coded bit LLR obtained by an initial process as a retransmission packet to be combined in the above description, but is not limited thereto. For example, coded bit LLRs obtained by iterative processes of a preset number of iterations may be used. Any of coded bit LLRs obtained by a plurality of iterative processes may be used. For example, a coded bit LLR having the highest likelihood may be used.

The case where a retransmission request to the first communication device is made after the second communication device receives the initial transmission packet, and two packets are combined when the second communication device receives a retransmission packet has been described, but the present invention is not limited thereto. For example, when the second reception device receives at least two retransmission packets, results after demodulation processes for all received packets may be combined, and results after demodulation processes for at least two packets among all the received packets may be combined.

The case of performing the iterative process when an error is detected in the error correction decoding result of data obtained by combining the demodulation result of an initial transmission packet and the demodulation result of a retransmission packet after the retransmission packet is received has been described. The case of using a received signal of an initial transmission packet stored by the received signal storage unit as a received signal for performing signal separation in the iterative process has been described, but the present invention is not limited thereto. For example, the retransmission packet may be used as a received signal for performing signal separation.

The case of using a multicarrier signal as a transmission/reception signal has been described above, but a single carrier signal may be used.

The case of using the interleaving unit and the de-interleaving unit has been described above, but the interleaving unit and the de-interleaving unit may not be used.

The case where the second communication device performs an iterative process using frequency-domain signal separation has been described above, but the present invention is not limited thereto. For example, the second communication device may perform an iterative process using time-domain signal separation.

The configuration of the second communication device of this embodiment is also applicable to a second communication device using a frequency domain SC/MMSE (Soft Canceller followed by Minimum Mean Squared Error filter) type of turbo equalization or a time domain SC/MMSE type of turbo equalization.

The configuration of the second communication device according to this embodiment is also applicable to the configuration of the second communication device of the second or third embodiment.

In the above-described embodiment, control of respective parts of the first communication device or the second communication device may be executed by recording a program for implementing functions of respective parts of the first communication devices 100a and 100d or the second communication devices 200a to 200d on a computer readable recording medium and enabling a computer system to read and execute the program recorded on the recording medium. The "computer system" used herein includes an OS and hardware, such as peripheral devices.

The "computer readable recording medium" is a portable medium such as a flexible disc, magneto-optical disc, ROM and CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing part of the above functions, or the above functions may be implemented in combination with a program already recorded on the computer system.

Although the embodiments of the present invention have been described with reference to the drawings, a specific configuration is not limited to the embodiments and the appended claims are intended to cover modifications without departing from the scope of the invention.

Industrial applicability

The present invention is applicable to a communication device, a communication system, a reception method, a communication method, and the like capable of reducing the number of retransmissions and the number of iterative processes for a signal to be transmitted from a first communication device to a second communication device.

**Claims**

1.    A second communication device which communicates with a first communication device, the second communication device comprising:

a reception unit which receives an initial transmission signal and at least one retransmission signal; and
an iterative detection and decoding unit which performs iterative processes of signal detection and signal decoding for at least one received signal among received signals received by the reception unit,

wherein the iterative detection and decoding unit comprises:

a combining unit which combines a result of signal detection obtained from at least one other received signal in one of the iterative processes.

2.    The second communication device according to claim 1,
wherein the iterative detection and decoding unit comprises:

a signal detection unit which detects a transmission signal based on the received signal and a result of the iterative process;
a combined signal storage unit which stores signals detected by the signal detection unit; and
a signal decoding unit which decodes signals combined by the combining unit.

3. The second communication device according to claim 2,
wherein the combining unit combines at least two signals among signals detected by the signal detection unit and signals previously stored by the combined signal storage unit.

4. The second communication device according to claim 2,
wherein the iterative detection and decoding unit comprises:

a received signal storage unit which stores the received signals, and
wherein the signal detection unit detects one of the received signals previously stored by the received signal storage unit.

5. The second communication device according to claim 4,
wherein the received signal storage unit stores only the initial transmission signal.

6. The second communication device according to claim 4,
wherein the received signal storage unit stores only the retransmission signal last received among the received signals.

7. The second communication device according to claim 2,
wherein the combined signal storage unit stores one of the signals that the signal detection unit detects for each iterative process based on the received signals.

8. The second communication device according to claim 2,
wherein the combining unit combines a result obtained by the iterative process from the initial transmission signal.

9. The second communication device according to claim,
wherein the combining unit combines likelihood information.

10. The second communication device according to claim 2,
wherein the iterative detection and decoding unit comprises:

a replica signal generation unit which generates a replica signal as a replica of a transmission signal based on a signal decoded by the signal decoding unit, and

wherein the signal detection unit comprises:

an interference removal unit which removes an interference component included in the received signal by using the replica signal and the received signal; and
a demodulation unit which demodulates the received signal from which the interference removal unit removes the interference component.

11. The second communication device according to claim 10,
wherein the interference removal unit removes at least one of an inter-symbol interference component and an inter-carrier interference component.

12. The second communication device according to claim 10,
wherein the iterative detection and decoding unit comprises:

a despreading unit which separates a code-multiplexed received signal, and
wherein the interference removal unit removes at least one of a multi-code interference component, an inter-symbol interference component and an inter-carrier interference component.

13. The second communication device according to claim 10,

wherein the iterative detection and decoding unit comprises:

a stream separation unit which separates a plurality of spatially multiplexed streams, and
wherein the interference removal unit removes at least one of an inter-stream interference component, an inter-symbol interference component and an inter-carrier interference component.

14. A communication system comprising a first communication device and a second communication device, wherein the first communication device comprises:

a transmission unit which transmits an initial transmission signal and at least one retransmission signal,

wherein the second communication device comprises:

a reception unit which receives an initial transmission signal and at least one retransmission signal; and
an iterative detection and decoding unit which performs iterative processes of signal detection and signal decoding for at least one received signal among received signals received by the reception unit, and

wherein the iterative detection and decoding unit comprises:

a combining unit which combines a result of signal detection obtained from at least one other received signal in one of the iterative processes.

15. A reception method of a second communication device which receives a signal from a first communication device, the reception method comprising:

receiving an initial transmission signal and at least one retransmission signal; and
performing iterative processes of signal detection and signal decoding for at least one received signal among received signals received by the reception,
wherein a combining a result of signal detection obtained from at least one other received signal in one of the iterative processes is performed in the performance.

16. A communication method of a communication system comprising a first communication device and a second communication device, the communication method comprising:

transmitting, by the first communication device, an initial transmission signal and at least one retransmission signal;
receiving, by the second communication device, an initial transmission signal and at least one retransmission signal; and
performing, by the second communication device, iterative processes of signal detection and signal decoding for at least one received signal among received signals received by the reception,
wherein a combining a result of signal detection obtained from at least one other received signal in one of the iterative processes is performed in the performance.

# FIG. 1

EP 2 247 015 A1

## FIG. 2

200a

**SECOND COMMUNICATION DEVICE**

REPLICA SIGNAL GENERATION UNIT — 214

TRANSMISSION SIGNAL INFORMATION ANALYSIS UNIT — 204

DE-INTERLEAVING UNIT — 210

HARQ PROCESSING UNIT — 211

SIGNAL DECODING UNIT — 212

RETRANSMISSION CONTROL UNIT — 213

A2

RADIO RECEPTION UNIT — 201

GI REMOVAL UNIT — 202

SEPARATION UNIT — 203

FFT UNIT — 205

INTERFERENCE CANCELLATION UNIT — 206

PROPAGATION CHANNEL COMPENSATION UNIT — 208

DEMODULATION UNIT — 209

PROPAGATION CHANNEL ESTIMATION UNIT — 207

RADIO TRANSMISSION UNIT — 225

GI INSERTION UNIT — 224

IFFT UNIT — 223

MODULATION UNIT — 222

RESPONSE SIGNAL GENERATION UNIT — 221

EP 2 247 015 A1

## FIG. 3

REPLICA SIGNAL

206 — INTERFERENCE CANCELLATION UNIT

PROPAGATION CHANNEL ESTIMATION VALUE

231 — INTERFERENCE SIGNAL REPLICA GENERATION UNIT

RECEIVED SIGNAL

232 — SUBTRACTION UNIT

233 — RECEIVED SIGNAL STORAGE UNIT

RETRANSMISSION CONTROL INFORMATION

## FIG. 4

RETRANSMISSION CONTROL INFORMATION

242 — COMBINED PACKET STORAGE UNIT

241 — PACKET COMBINING UNIT

HARQ PROCESSING UNIT — 211

# FIG. 5

CODED BIT LLR

212

SIGNAL DECODING UNIT

251

ERROR CORRECTION DECODING UNIT

CODED BIT LLR

252

ERROR DETECTION UNIT

DECODED BIT ERROR DETECTION INFORMATION

# FIG. 6

214

REPLICA SIGNAL GENERATION UNIT

262

INTERLEAVING UNIT

263

MODULATION UNIT

FREQUENCY-DOMAIN REPLICA SIGNAL

# FIG. 7

```
                    START
                      │
                      ▼
            ┌──────────────────┐ S101          ┌──────────────────────┐ S115
            │  RECEIVE INITIAL │               │       RECEIVE        │
            │TRANSMISSION PACKET│               │RETRANSMISSION PACKET │
            └──────────────────┘               └──────────────────────┘
                      │                                    │
                      ▼                                    ▼
            ┌──────────────────┐ S102          ┌──────────────────────┐ S116
            │   STORE INITIAL  │               │       GENERATE       │
            │TRANSMISSION PACKET│               │    RETRANSMISSION    │
            └──────────────────┘               │  CONTROL INFORMATION │
                      │                         └──────────────────────┘
                      ▼
            ┌──────────────────┐ S103
            │   DETECT SIGNAL  │
            └──────────────────┘
                      │
                      ▼
           NO       ╱ S104 ╲
        ◄──────────◄ INITIAL ►
                    ╲PROCESS?╱
                      │ YES
                      ▼          S105
            ┌──────────────────┐
            │STORE COMBINED PACKET│
            └──────────────────┘
                      │
                      ▼        S106
                  ╱ INITIAL ╲   YES        ┌──────────────────────┐ S113
                 ◄ TRANSMISSION ►─────────►│  CANCEL INTERFERENCE │
                  ╲ PACKET?  ╱             └──────────────────────┘
                      │ NO                            ▲
                      ▼       S107          ┌──────────────────────┐ S112
            ┌──────────────────┐            │       GENERATE       │
            │  COMBINE PACKETS │            │    REPLICA SIGNAL    │
            └──────────────────┘            └──────────────────────┘
                      │                                ▲
                      ▼        S108
            ┌──────────────────┐
            │   DECODE SIGNAL  │
            └──────────────────┘
                      │
                      ▼       S109
                  ╱  ERROR  ╲   YES
                 ◄ DETECTED? ►──────────┐
                  ╲         ╱           ▼       S111
                      │ NO          ╱ ITERATIVE ╲  YES
                      │            ◄  PROCESS?   ►─────►
                      ▼            ╲            ╱
            ┌──────────────┐ S110       │ NO
            │ TRANSMIT ACK │            ▼        S114
            └──────────────┘   ┌──────────────────┐
                      │        │  TRANSMIT NACK   │
                      ▼        └──────────────────┘
                    END
```

FIG. 8

EP 2 247 015 A1

## FIG. 9

| CODING RATE:1/3 | CODING RATE:1/2 | CODING RATE:3/4 |
|---|---|---|
| $\begin{pmatrix} x \\ y \\ z \end{pmatrix} = \begin{pmatrix} 1 \\ 1 \\ 1 \end{pmatrix}$ | $\begin{pmatrix} x \\ y \\ z \end{pmatrix} = \begin{pmatrix} 1 & 1 \\ 1 & 0 \\ 0 & 1 \end{pmatrix}$ | $\begin{pmatrix} x \\ y \\ z \end{pmatrix} = \begin{pmatrix} 1 & 1 & 1 & 1 & 1 & 1 \\ 1 & 0 & 0 & 0 & 0 & 0 \\ 0 & 0 & 0 & 1 & 0 & 0 \end{pmatrix}$ |

## FIG. 10

# FIG. 11

| | CODING RATE:1/2 |
|---|---|
| INITIAL TRANSMISSION PACKET | $\begin{pmatrix} x \\ y \\ z \end{pmatrix} = \begin{pmatrix} 1 & 1 \\ 1 & 0 \\ 0 & 1 \end{pmatrix}$ |
| RETRANSMISSION PACKET | $\begin{pmatrix} x \\ y \\ z \end{pmatrix} = \begin{pmatrix} 1 & 1 \\ 0 & 1 \\ 1 & 0 \end{pmatrix}$ |

# FIG. 12

| CODED BIT LLRs OF INITIAL TRANSMISSION PACKET | A1, B1, C1, D1, E1, 0, G1, 0, 0, J1, 0, L1 |
|---|---|
| CODED BIT LLRs OF RETRANSMISSION PACKET | A2, B2, C2, D2, 0, F2, 0, H2, I2, 0, K2, 0 |
| CODED BIT LLRs AFTER COMBINING | A1+A2, B1+B2, C1+C2, D1+D2, E1, F2, G1, H2, I2, J1, K2, L1 |

# FIG. 13

SECOND COMMUNICATION DEVICE — 200b

Blocks and labels:
- 201 RADIO RECEPTION UNIT
- 202 GI REMOVAL UNIT
- 203 SEPARATION UNIT
- 205 FFT UNIT
- 204 TRANSMISSION SIGNAL INFORMATION ANALYSIS UNIT
- 301 RECEIVED SIGNAL STORAGE UNIT
- 302 SIGNAL DETECTION UNIT
- 303 SUBTRACTION UNIT
- 304 DE-INTERLEAVING UNIT
- 305 HARQ PROCESSING UNIT
- 306 SIGNAL DECODING UNIT
- 307 RETRANSMISSION CONTROL UNIT
- 308 SUBTRACTION UNIT
- 309 INTERLEAVING UNIT
- 207 PROPAGATION CHANNEL ESTIMATION UNIT
- 221 RESPONSE SIGNAL GENERATION UNIT
- 222 MODULATION UNIT
- 223 IFFT UNIT
- 224 GI INSERTION UNIT
- 225 RADIO TRANSMISSION UNIT

$\Lambda_1[b(k)]$, $\lambda_1[b(k)]$, $\lambda_1^p[b(i)]$, $\lambda_1^p[b(i)]$, $\lambda_i^p[b(i)]$, $\lambda_2[b(i)]$, $\Lambda_2[b(i)]$, $\lambda_2^p[b(k)]$

A2

# FIG. 14

200c

SECOND COMMUNICATION DEVICE

- 214 REPLICA SIGNAL GENERATION UNIT
- 204 TRANSMISSION SIGNAL INFORMATION ANALYSIS UNIT
- 210 DE-INTERLEAVING UNIT
- 212 SIGNAL DECODING UNIT
- 213 RETRANSMISSION CONTROL UNIT
- A2
- 201 RADIO RECEPTION UNIT
- 202 GI REMOVAL UNIT
- 203 SEPARATION UNIT
- 205 FFT UNIT
- 401 HARQ PROCESSING UNIT
- 402 INTERFERENCE CANCELLATION UNIT
- 208 PROPAGATION CHANNEL COMPENSATION UNIT
- 207 PROPAGATION CHANNEL ESTIMATION UNIT
- 209 DEMODULATION UNIT
- 225 RADIO TRANSMISSION UNIT
- 224 GI INSERTION UNIT
- 223 IFFT UNIT
- 222 MODULATION UNIT
- 221 RESPONSE SIGNAL GENERATION UNIT

EP 2 247 015 A1

# FIG. 15

RETRANSMISSION CONTROL INFORMATION

412

COMBINED PACKET
STORAGE UNIT

411

PACKET
COMBINING UNIT

HARQ PROCESSING UNIT 401

# FIG. 16

REPLICA SIGNAL

402 INTERFERENCE
CANCELLATION UNIT

421

INTERFERENCE
SIGNAL REPLICA
GENERATION UNIT

PROPAGATION CHANNEL
ESTIMATION VALUE

422

RECEIVED SIGNAL

SUBTRACTION UNIT

# FIG. 17

FIRST COMMUNICATION DEVICE

TRANSMISSION PROCESSING UNIT FOR EACH ANTENNAS (500-N)

TRANSMISSION PROCESSING UNIT FOR EACH ANTENNAS (500-1)

ENCODING UNIT (501) → INTERLEAVING UNIT (502) → MODULATION UNIT (503) → IFFT UNIT (504) → TRANSMISSION SIGNAL INFORMATION MULTIPLEXING UNIT (505) → GI INSERTION UNIT (506) → RADIO TRANSMISSION UNIT (507)

TRANSMISSION SIGNAL STORAGE UNIT (516)

RESPONSE SIGNAL ANALYSIS UNIT (515) ← DEMODULATION UNIT (514) ← FFT UNIT (513) ← GI REMOVAL UNIT (512) ← RADIO RECEPTION UNIT (511)

A1-N
A1-1

100d

EP 2 247 015 A1

# FIG. 18

EP 2 247 015 A1

# FIG. 19

REPLICA SIGNAL

606 — SIGNAL SEPARATION UNIT

634

PROPAGATION CHANNEL ESTIMATION VALUE →

INTERFERENCE SIGNAL REPLICA GENERATION UNIT

635

RECEIVED SIGNAL

SUBTRACTION UNIT

633

RECEIVED SIGNAL STORAGE UNIT

RETRANSMISSION CONTROL INFORMATION

# FIG. 20A

EP 2 247 015 A1

# FIG. 20B

EP 2 247 015 A1

**INTERNATIONAL SEARCH REPORT**

| International application No. |
|---|
| PCT/JP2009/052936 |

A. CLASSIFICATION OF SUBJECT MATTER
*H04L1/16*(2006.01)i, *H04B7/04*(2006.01)i, *H04J11/00*(2006.01)i, *H04L29/08*
(2006.01)i

According to International Patent Classification (IPC) or to both national classification and IPC

B. FIELDS SEARCHED

Minimum documentation searched (classification system followed by classification symbols)
H04L1/16, H04B7/04, H04J11/00, H04L29/08

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | Tatsunori YUI et al., "ICI Canceller o Mochiiru Turbo Fugoka MC-CDMA ni Okeru Hantei Kikan Channel Suitei", IEICE Technical Report, RCS 107 (262), The Institute of Electronics, The Institute of Electronics, Information and Communication Engineers, 11 October, 2007 (11. 10.07), pages 7 to 12 | 1-4,6-12, 14-16 |
| X | Koichi ADACHI et al., "Kurikaeshi Henkei QRD-M Shingo Bunriho o Mochiiru OFDM MIMO no HARQ Throughput Tokusei", IEICE Technical Report, RCS 107(147), The Institute of Electronics, Information and Communication Engineers, 2007. 07, pages 47 to 52 | 1-4,6-10, 13-16 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 April, 2009 (06.04.09) | 19 May, 2009 (19.05.09) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2009/052936

C (Continuation).  DOCUMENTS CONSIDERED TO BE RELEVANT

| Category* | Citation of document, with indication, where appropriate, of the relevant passages | Relevant to claim No. |
|---|---|---|
| X | Nobuhiko MIKI et al., "Kudari Link Kosoku Packet Denso ni Okeru Packet Goseigata Hybrid ARQ ni Tekishita Nan Hantei Replica o Mochiiru Multipath Kansho Canceller no Tokusei", IEICE Technical Report, AP 101(368), The Institute of Electronics, Information and Communication Engineers, 2001.10, pages 99 to 104 | 1-4,6-11, 14-16 |
| X | JP 2007-184926 A  (NTT Docomo Inc.), 19 July, 2007 (19.07.07), Par. Nos. [0002], [0014], [0028] to [0030], [0081], [0097], [0102], [0136], [0166]; 1, 2, 9-11 (Family: none) | 1-4,6-10, 14-16 |

Form PCT/ISA/210 (continuation of second sheet) (April 2007)

45

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008040008 A
- JP 2004221702 A
- JP 2005198223 A

**Non-patent literature cited in the description**

- **Y. Zhou ; J. Wang ; M. Sawahashi.** Downlink Transmission of Broadband OFCDM Systems-Part I: Hybrid Detection. *IEEE Transaction on Communication,* April 2005, vol. 53 (4), 718-729
- **D. Chase.** Code combining-A maximum likelihood decoding approach for combing and arbitrary number of noisy packets. *IEEE Trans. Commun.,* May 1985, vol. COM-33, 385-393
- **J. Hagenauer.** Rate-compatible punctured convolutional codes (RCPC codes) and their application. *IEEE Trans. Commun.,* April 1998, vol. 36, 389-400